# EUROPEAN PATENT SPECIFICATION

(11) **EP 4 358 344 B1**
(45) Date of publication and mention of the grant of the patent: **25.11.2026**
(21) Application number: 23200737.7
(22) Date of filing: 29.09.2023
(51) Int. Cl.: H02J 3/38, H02J 3/46, H02J 3/48, H02J 3/50

(54) **POWER-STATION POWER SYSTEM AND METHOD FOR CONTROLLING POWER OF POWER-STATION POWER SYSTEM**
KRAFTWERKSLEISTUNGSSYSTEM UND VERFAHREN ZUR STEUERUNG DER LEISTUNG EINES KRAFTWERKSLEISTUNGSSYSTEMS
SYSTÈME D'ALIMENTATION DE CENTRALE ÉLECTRIQUE ET PROCÉDÉ DE COMMANDE DE PUISSANCE DE SYSTÈME D'ALIMENTATION DE CENTRALE ÉLECTRIQUE

(30) Priority: 29.09.2022 CN 202211202647
(43) Date of publication of application: 24.04.2024
(73) Proprietor: Huawei Digital Power Technologies Co., Ltd., Shenzhen, Guangdong 518043 (CN)
(72) Inventor: TENG, Yaqing, 518129 Shenzhen, Guangdong (CN); WANG, Shuchao, 518129 Shenzhen, Guangdong (CN); SONG, Cheng, 518129 Shenzhen, Guangdong (CN); CONG, Jianou, 100071 Fengtai District, Beijing (CN)
(74) Representative: Maiwald GmbH

(56) References cited:
- US-A1- 2019 207 391
- US-A1- 2020 274 357
- US-B2- 9 755 430

## Description

### TECHNICAL FIELD

This application relates to the field of electronic power, and in particular, to a power-station power system and a method for controlling power of the power-station power system.

### BACKGROUND

As a scale and a quantity of photovoltaic stations keep increasing, it has already become a common requirement in various countries for a photovoltaic station to participate in power system control and have a capability of adjusting active and reactive power output of grid-tied points. For implementation of active and reactive power control of a grid-tied point, reliance on station-level coordinated distribution control is needed, to implement accurate control of power of the grid-tied point. Power control of a photovoltaic station includes: obtaining active and reactive capacities of the photovoltaic station; and power distribution. Currently, power control of the photovoltaic station is performed mainly by using a plurality of sub-arrays or a plurality of inverters in sub-arrays in a power system as samples, setting them to run in a maximum power generation mode, and obtaining active and reactive capacities of the photovoltaic station based on the sample sub-arrays or sample inverters, to perform, based on the obtained active and reactive capacities, power distribution for the sub-arrays or the plurality of inverters in the sub-arrays.

In a research and experiment process, it is found that, when the sample sub-arrays or the sample inverters are used to obtain the active and reactive capacities, because differences exist between the sub-arrays and between the inverters, accuracy of statistics about the active and reactive capacities of the photovoltaic station is not high, and credibility of the active and reactive capacities is low. In addition, power of existing photovoltaic stations is distributed in a simple equal-distribution manner to some inverters. Consequently, precise and differentiated control of all inverters of the entire photovoltaic station cannot be implemented, power distribution precision is low, and a control error is high.

US 9,755,430 B2 describes a virtual inverter for power generation units.

US 2019/0207391 A1 describes a dynamic active and reactive power load sharing in an islanded microgrid.

US 2020/0274357 A1 describes a distributed power supply system.

### SUMMARY

Embodiments of this application provide a power-station power system, and a method for controlling power of the power-station power system, to avoid a problem that precise and differential control of all inverter units in the power-station power system cannot be implemented due to coarse power control management of a power-station power system. In this way, power control precision is higher, and reliability is higher.

The present invention is defined by the subject-matter of the independent claims. Additional features of the invention are presented in the dependent claims.

According to a first aspect, this application provides a power-station power system. The power-station power system includes a power-station controller, a power-station voltage transformer unit, a plurality of direct-current conversion units, and a plurality of inverter units. Alternating-current ends of the plurality of inverter units are coupled with and connected in parallel to the power-station voltage transformer unit, and a direct-current end of any inverter unit is coupled with maximum power point tracking MPPT controllers of the plurality of direct-current conversion units. The power-station controller is configured to: obtain, based on an active capacity of each inverter unit and a reactive capacity of each inverter unit that are obtained by target MPPT controllers coupled with each inverter unit, an active capacity of a power station and a reactive capacity of the power station, where the target MPPT controllers coupled with each inverter unit are a part of all MPPT controllers coupled with the inverter unit. The power-station controller is further configured to: perform, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit.

In this application, each inverter unit in the power-station power system may obtain some MPPT controllers from a plurality of MPPT controllers coupled with the inverter unit, and use them as target MPPT controllers, so that an active capacity of each inverter unit and a reactive capacity of each inverter unit are obtained based on the target MPPT controllers. The power-station controller of the power-station power system may obtain, based on the active capacity of each inverter unit and the reactive capacity of each inverter unit, an active capacity of the power station and a reactive capacity of the power station; and perform, based on the active capacity of the power station and received target active power of the power station, active power control on other MPPT controllers except the target MPPT controllers in the plurality of MPPT controllers coupled with each inverter unit, and perform reactive power control on each inverter unit based on the reactive capacity of the power station and received target reactive power of the power station. In this way, the active capacity of each inverter unit and the reactive capacity of each inverter unit are obtained based on the target MPPT controllers coupled with the inverter unit; and then the active capacity of the power station and the reactive capacity of the power station are obtained based on the active capacity of each inverter unit and the reactive capacity of each inverter unit. Compared with obtaining an active capacity of a power station and a reactive capacity of the power station by setting sample inverter units, this is more accurate and credible. In addition, power control is performed on all of the inverter units (or MPPT controllers coupled with the inverter units) based on the obtained active capacity of the power station and the obtained reactive capacity of the power station, thereby avoiding a problem of coarse power control and management in the power-station power system. Power control precision is higher, and reliability is higher.

With reference to the first aspect, in a first possible implementation, the power-station controller is further configured to: control the target MPPT controllers coupled with each inverter unit to perform maximum power point tracking on photovoltaic strings connected to the target MPPT controllers, so as to obtain the active capacity of each inverter unit and the reactive capacity of each inverter unit. The target MPPT controllers coupled with each inverter unit are MPPT controllers of a target direct-current conversion unit coupled with the inverter unit, and the target direct-current conversion unit coupled with each inverter unit is a part of all direct-current conversion units coupled with the inverter unit; or the target MPPT controllers coupled with each inverter unit are one or more MPPT controllers of the direct-current conversion units. The active capacity of each inverter unit and the reactive capacity of each inverter unit that are obtained based on the target MPPT controllers of each inverter unit are closer to an actual active capacity of the inverter unit and an actual reactive capacity of the inverter unit. The obtained active capacity and the obtained reactive capacity are highly accurate.

With reference to the first possible implementation of the first aspect, in a second possible implementation, a power control mode of the power-station controller is that active power control takes precedence. The power-station controller is further configured to: when the target active power of the power station is less than the active capacity of the power station, control, based on the active capacity of the power station and the target active power of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station. The power-station controller performs, based on the obtained active capacity of the power station and the target active power of the power station, power control on the other MPPT controllers except the target MPPT controllers. Power control precision is high, and reliability is high.

With reference to the second possible implementation of the first aspect, in a third possible implementation, the power-station controller is further configured to: when the target active power of the power station is less than the active capacity of the power station, update, based on the target active power of the power station and maximum apparent power of the power station, the reactive capacity of the power station; and perform reactive power control on each inverter unit based on the target reactive power of the power station and the updated reactive capacity of the power station, so that a sum of reactive power output by all of the inverter units is equal to the target reactive power of the power station or the updated reactive capacity of the power station. The power-station controller performs power control on each inverter unit based on the obtained reactive capacity of the power station and the target reactive power of the power station. Power control precision is high, and reliability is high.

With reference to the first possible implementation of the first aspect, in a fourth possible implementation, a control mode of the power-station voltage transformer unit is that active power control takes precedence. The power-station controller is further configured to: when the target active power of the power station is not less than the active capacity of the power station, control each MPPT controller coupled with each inverter unit to perform maximum power point tracking on a photovoltaic string connected to the MPPT controller, so that direct-current conversion circuits associated with the plurality of MPPT controllers output maximum active power, and active power output to an alternating-current power grid can meet (or is close to) the target active power of the power station, thereby making full use of power resources with high reactive power control precision.

With reference to the fourth possible implementation of the first aspect, in a fifth possible implementation, the power-station controller is further configured to: when the target active power of the power station is not less than the active capacity of the power station, perform reactive power control on each inverter unit based on the target reactive power of the power station and the reactive capacity of the power station, so that a sum of reactive power output by all of the inverter units is equal to the target reactive power of the power station or the updated reactive capacity of the power station. The power-station controller performs power control on each inverter unit based on the obtained reactive capacity of the power station and the target reactive power of the power station. Power control precision is high, and reliability is high.

With reference to the first possible implementation of the first aspect, in a sixth possible implementation, a control mode of the power-station voltage transformer unit is that reactive power control takes precedence. The power-station controller is further configured to: perform reactive power control on each inverter unit based on the target reactive power of the power station and the reactive capacity of the power station, so that a sum of reactive power output by all of the inverter units is equal to the target reactive power of the power station. The power-station controller performs power control on each inverter unit based on the obtained reactive capacity of the power station and the target reactive power of the power station. Power control precision is high, and reliability is high.

With reference to the sixth possible implementation of the first aspect, in a seventh possible implementation, the power-station controller is further configured to: when the target reactive power of the power station is less than the reactive capacity of the power station and the target active power of the power station is less than the active capacity of the power station, control, based on the target active power of the power station and the active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station. The power-station controller performs, based on the obtained active capacity of the power station and the target active power of the power station, power control on the other MPPT controllers except the target MPPT controllers. Power control precision is high, and reliability is high.

With reference to the sixth possible implementation of the first aspect, in an eighth possible implementation, the power-station controller is further configured to: when the target reactive power of the power station is less than the reactive capacity of the power station and the target active power of the power station is not less than the active capacity of the power station, control each MPPT controller coupled with each inverter unit to perform maximum power point tracking on a photovoltaic string connected to the MPPT controller, so that direct-current conversion circuits associated with the plurality of MPPT controllers output maximum active power. In this way, active power output to an alternating-current power grid can meet (or is close to) the target active power of the power station, thereby making full use of power resource with high reactive power control precision.

With reference to the sixth possible implementation of the first aspect, in a ninth possible implementation, the power-station controller is further configured to: when the target reactive power of the power station is not less than the reactive capacity of the power station, update, based on the target reactive power of the power station and maximum apparent power of the power station, the active capacity of the power station; and control, based on the target active power of the power station and the updated active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station or the updated active capacity of the power station. The power-station controller performs, based on the obtained active capacity of the power station and the target active power of the power station, power control on the other MPPT controllers except the target MPPT controllers. Power control precision is high, and reliability is high.

With reference to any one of the second possible implementation of the first aspect to the ninth possible implementation of the first aspect, in a tenth possible implementation, one or more inverter units in the plurality of inverter units form one sub-array voltage transformer unit, and a plurality of sub-array voltage transformer units are coupled with and connected in parallel to the power-station voltage transformer unit. The power-station controller is further configured to: obtain an active-power configuration value or a reactive-power configuration value of each sub-array voltage transformer unit; and control each sub-array voltage transformer unit to control, based on the active-power configuration value of the sub-array voltage transformer unit, other MPPT controllers except the target MPPT controllers in the plurality of MPPT controllers coupled with each inverter unit to perform active power control; or perform reactive power control on each inverter unit based on the reactive-power configuration value of each sub-array voltage transformer unit. The power-station controller controls, based on the active-power configuration value of each sub-array voltage transformer unit by using each sub-array voltage transformer unit, other MPPT controllers except the target MPPT controllers in the plurality of MPPT controllers coupled with each inverter unit to perform active power control. Power control precision is high, and reliability is high.

With reference to the tenth possible implementation of the first aspect, in an eleventh possible implementation, each sub-array voltage transformer unit is configured to: obtain an active capacity of the sub-array voltage transformer unit based on an active capacity reported by each inverter unit. The power-station controller is further configured to: obtain, based on the active capacity of the power station or the updated active capacity of the power station, the target active power of the power station, and the active capacity of each sub-array voltage transformer unit, the active-power configuration value of each sub-array voltage transformer unit. The power-station controller assigns a corresponding active-power configuration value to each sub-array voltage transformer unit, thereby implementing more precise power control.

With reference to the eleventh possible implementation of the first aspect, in a twelfth possible implementation, each sub-array voltage transformer unit is further configured to: send an active-power configuration value to each inverter unit based on the active-power configuration value of the sub-array voltage transformer unit, the active capacity of the sub-array voltage transformer unit, and the active capacity of each inverter unit, so that each inverter unit controls, based on the active-power configuration value of the inverter unit, other MPPT controllers except the target MPPT controllers in a plurality of MPPT controllers coupled with the inverter unit to perform active power control. Each sub-array voltage transformer unit assigns a corresponding active-power configuration value to each inverter unit based on the assigned active-power configuration value, thereby implementing more precise power control.

With reference to the twelfth possible implementation of the first aspect, in a thirteenth possible implementation, each inverter unit is further configured to: send, based on the active-power configuration value of the inverter unit and a sum of maximum power point power corresponding to the target MPPT controllers associated with the inverter unit, active-power configuration values to other MPPT controllers except the target MPPT controllers in the plurality of MPPT controllers coupled with the inverter unit, so that the other MPPT controllers perform, based on the active-power configuration values, active power control on direct-current conversion circuits associated with the other MPPT controllers. Each inverter unit assigns corresponding active-power configuration values to the other MPPT controllers based on the assigned active-power configuration value, so that a sum of active power output by direct-current conversion circuits associated with all of the MPPT controllers meets the target active power of the power station.

With reference to the tenth possible implementation of the first aspect, in a fourteenth possible implementation, each sub-array voltage transformer unit is configured to: obtain a reactive capacity of the sub-array voltage transformer unit based on a reactive capacity reported by each inverting unit. The power-station controller is further configured to: obtain, based on the reactive capacity of the power station or the updated reactive capacity of the power station, the target reactive power of the power station, and the reactive capacity of each sub-array voltage transformer unit, the reactive-power configuration value of each sub-array voltage transformer unit. The power-station controller assigns a corresponding reactive-power configuration value to each sub-array voltage transformer unit, thereby implementing more precise power control.

With reference to the fourteenth possible implementation of the first aspect, in a fifteenth possible implementation, each sub-array voltage transformer unit is further configured to: send a reactive-power configuration value to each inverter unit based on the reactive-power configuration value of the sub-array voltage transformer unit, the reactive capacity of the sub-array voltage transformer unit, and the reactive capacity of each inverter unit, so that each inverter unit performs reactive power control based on the reactive-power configuration value of the inverter unit. Each sub-array voltage transformer unit assigns a corresponding reactive-power configuration value to each inverter unit based on the assigned active-power configuration value, thereby implementing more precise power control.

According to a second aspect, this application provides a method for controlling power of a power-station power system. The power-station power system includes a power-station controller, a power-station voltage transformer unit, a plurality of direct-current conversion units, and a plurality of inverter units. Alternating-current ends of the plurality of inverter units are coupled with and connected in parallel to the power-station voltage transformer unit, and a direct-current end of any inverter unit is coupled with maximum power point tracking MPPT controllers of a plurality of direct-current conversion units. The method includes: obtaining, by the inverter units, an active capacity of each inverter unit and a reactive capacity of each inverter unit based on target MPPT controllers coupled with each inverter unit, where the target MPPT controllers coupled with each inverter unit are a part of all MPPT controllers coupled with the inverter unit; obtaining, by using the power-station controller, based on the active capacity of each inverter unit and the reactive capacity of each inverter unit, an active capacity of a power station and a reactive capacity of the power station; and performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit.

In this application, each inverter unit may obtain some MPPT controllers from a plurality of MPPT controllers coupled with the inverter unit, and use them as target MPPT controllers, so that an active capacity of each inverter unit and a reactive capacity of each inverter unit are obtained based on the target MPPT controllers. The power-station controller obtains, based on the active capacity of each inverter unit and the reactive capacity of each inverter unit, an active capacity of the power station and a reactive capacity of the power station; performs, based on the active capacity of the power station and received target active power of the power station, active power control on other MPPT controllers except the target MPPT controllers in the plurality of MPPT controllers coupled with each inverter unit; and performs reactive power control on each inverter unit based on the reactive capacity of the power station and received target reactive power of the power station. In this way, the active capacity of each inverter unit and the reactive capacity of each inverter unit are obtained based on the target MPPT controllers coupled with the inverter unit; and then the active capacity of the power station and the reactive capacity of the power station are obtained based on the active capacity of each inverter unit and the reactive capacity of each inverter unit. Compared with obtaining an active capacity of a power station and a reactive capacity of the power station by setting sample inverter units, this is more accurate and credible. In addition, power control is performed on all of the inverter units (or MPPT controllers coupled with the inverter units) based on the obtained active capacity of the power station and the obtained reactive capacity of the power station, thereby avoiding a problem of coarse power control and management in the power-station power system. Power control precision is higher, and reliability is higher.

With reference to the second aspect, in a first possible implementation, a power control mode of the power-station controller is that active power control takes precedence; and the performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit includes: when the target active power of the power station is less than the active capacity of the power station, controlling, by using the power-station controller, based on the active capacity of the power station and the target active power of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station; and when the target active power of the power station is less than the active capacity of the power station, updating, by using the power-station controller, based on the target active power of the power station and maximum apparent power of the power station, the reactive capacity of the power station; and performing, by using the power-station controller, reactive power control on each inverter unit based on the target reactive power of the power station and the updated reactive capacity of the power station, so that a sum of reactive power output by the inverter units is equal to the target reactive power of the power station or the updated reactive capacity of the power station. The power-station controller performs, based on the obtained active capacity of the power station and the target active power of the power station, power control on the other MPPT controllers except the target MPPT controllers. Power control precision is high, and reliability is high.

With reference to the second aspect, in a second possible implementation, a power control mode of the power-station controller is that active power control takes precedence; and the performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit includes: when the target active power of the power station is not less than the active capacity of the power station, controlling, by using the power-station controller, each MPPT controller coupled with each inverter unit to perform maximum power point tracking on a photovoltaic string connected to the MPPT controller, so that direct-current conversion circuits associated with the plurality of MPPT controllers output maximum active power; and when the target active power of the power station is not less than the active capacity of the power station, performing, by using the power-station controller, reactive power control on each inverter unit based on the target reactive power of the power station and the reactive capacity of the power station, so that a sum of reactive power output by the inverter units is equal to the target reactive power of the power station or the updated reactive capacity of the power station. The power-station controller performs, based on the obtained active capacity of the power station and the target active power of the power station, power control on the other MPPT controllers except the target MPPT controllers. Power control precision is high, and reliability is high.

With reference to the second aspect, in a third possible implementation, a power control mode of the power-station controller is that reactive power control takes precedence; and the performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit includes: performing, by using the power-station controller, reactive power control on each inverter unit based on the target reactive power of the power station and the reactive capacity of the power station, so that a sum of reactive power output by all of the inverter units is equal to the target reactive power of the power station; and when the target reactive power of the power station is less than the reactive capacity of the power station and the target active power of the power station is less than the active capacity of the power station, controlling, by using the power-station controller, based on the target active power of the power station and the active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station. The power-station controller performs power control on each inverter unit based on the obtained reactive capacity of the power station and the target reactive power of the power station. Power control precision is high, and reliability is high.

With reference to the second aspect, in a fourth possible implementation, a power control mode of the power-station controller is that reactive power control takes precedence; and the performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit includes: performing, by using the power-station controller, reactive power control on each inverter unit based on the target reactive power of the power station and the reactive capacity of the power station, so that a sum of reactive power output by all of the inverter units is equal to the target reactive power of the power station; and when the target reactive power of the power station is less than the reactive capacity of the power station and the target active power of the power station is not less than the active capacity of the power station, controlling, by using the power-station controller, each MPPT controller coupled with each inverter unit to perform maximum power point tracking on a photovoltaic string connected to the MPPT controller, so that direct-current conversion circuits associated with the plurality of MPPT controllers output maximum active power. The power-station controller performs power control on each inverter unit based on the obtained reactive capacity of the power station and the target reactive power of the power station. Power control precision is high, and reliability is high.

With reference to the second aspect, in a fifth possible implementation, a power control mode of the power-station controller is that reactive power control takes precedence; and the performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit includes: performing, by using the power-station controller, reactive power control on each inverter unit based on the target reactive power of the power station and the reactive capacity of the power station, so that a sum of reactive power output by all of the inverter units is equal to the target reactive power of the power station; when the target reactive power of the power station is not less than the reactive capacity of the power station, updating, by using the power-station controller, based on the target reactive power of the power station and maximum apparent power of the power station, the active capacity of the power station; and controlling, by using the power-station controller, based on the target active power of the power station and the updated active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station or the updated active capacity of the power station. The power-station controller performs power control on each inverter unit based on the obtained reactive capacity of the power station and the target reactive power of the power station. Power control precision is high, and reliability is high.

### BRIEF DESCRIPTION OF DRAWINGS

FIG. 1 is a schematic diagram of an application scenario of a power-station power system according to this application;
FIG. 2 is a schematic diagram of a structure of a power-station power system according to this application;
FIG. 3 is another schematic diagram of a structure of a power-station power system according to this application;
FIG. 4 is a still another schematic diagram of a structure of a power-station power system according to this application;
FIG. 5 is a schematic diagram of coupling an inverter unit with target MPPT controllers according to this application;
FIG. 6 is another schematic diagram of coupling an inverter unit with target MPPT controllers according to this application; and
FIG. 7A to FIG. 7C are a schematic flowchart of a method for controlling power of a power-station power system according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

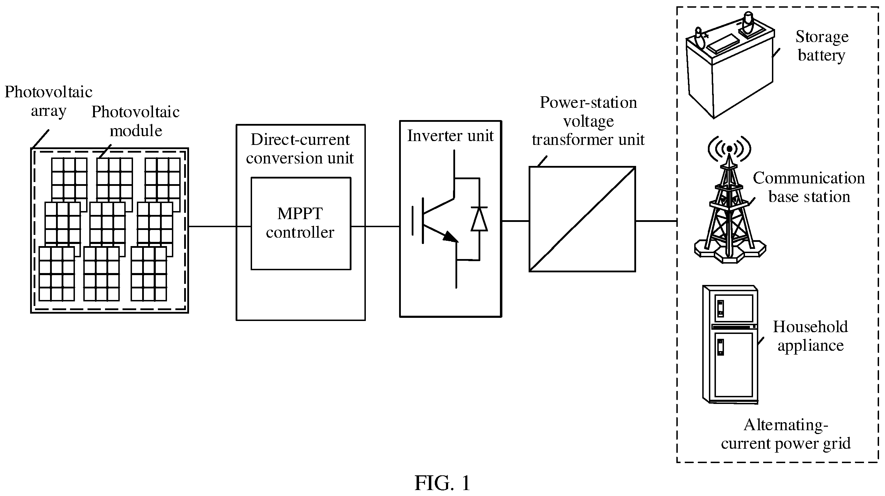

Refer to FIG. 1. FIG. 1 is a schematic diagram of an application scenario of a power-station power system according to this application. The power-station power system provided in this application may include a power-station voltage transformer unit, a direct-current conversion unit, and an inverter unit. An alternating-current end of the inverter unit is coupled with an alternating-current power grid by using the power-station voltage transformer unit, and a direct-current end of the inverter unit is coupled with a photovoltaic array by using the direct-current conversion unit. The photovoltaic array may include one or more photovoltaic strings connected in parallel, and one photovoltaic string may be obtained by connecting one or more photovoltaic modules in series. The direct-current conversion unit may perform voltage conversion (which may be voltage boosting, voltage decreasing, or the like) on a direct current output by the photovoltaic array. The inverter unit may perform inverse conversion on a direct current output by the direct-current conversion unit, and output an alternating current obtained after the inverse conversion to the power-station voltage transformer unit. The power-station voltage transformer unit performs voltage conversion on the alternating current, and then supplies power to an electrical device such as a battery, a communication base station, or household appliances in the alternating-current power grid.

In some feasible implementations, the power-station power system may further include a power-station controller (not shown in FIG. 1). The power-station power system may include a plurality of inverter units and a plurality of direct-current conversion units. Herein, each direct-current conversion unit may include a plurality of MPPT controllers for maximum power point tracking; alternating-current ends of the plurality of inverter units may be coupled with and connected in parallel to the power-station voltage transformer unit; and a direct-current end of each inverter unit may be coupled with MPPT controllers of a plurality of direct-current conversion units. The power-station power system may perform power control by using the power-station controller, to adjust active power and reactive power that are output to the alternating-current power grid. Currently, power control of a power station is performed by: dividing a plurality of sub-arrays (where each sub-array includes a plurality of inverter units) in a power-station power system as sample sub-arrays, or dividing a plurality of inverter units in a sub-array as sample inverter units, setting them to run in a maximum power generation mode, and obtaining available active power-generation power (which may be referred to as an active capacity) and available reactive power-generation power (which may be referred to as a reactive capacity) of a power-station voltage transformer unit based on the sample sub-arrays or the sample inverter units, so as to perform power distribution for the sub-arrays or the plurality of inverter units in the sub-array based on the obtained active capacity and reactive capacity of the power-station voltage transformer unit. However, because differences exist between the sub-arrays and between the inverters, accuracy of the active capacity and the reactive capacity that are obtained based on the sample sub-arrays or the sample inverter units is not high, causing low credibility of the active capacity and the reactive capacity. In addition, existing power distribution is to perform equal power distribution for some inverters in a power-station power system. Consequently, precise and differentiated control of all inverters in the power-station power system cannot be implemented, power distribution precision is low, and a control error is high.

In the power-station power system provided in this application, each inverter unit in the power-station power system may obtain some MPPT controllers from a plurality of MPPT controllers coupled with the inverter unit, and use them as target MPPT controllers, so that an active capacity of each inverter unit and a reactive capacity of each inverter unit are obtained based on the target MPPT controllers. The power-station controller of the power-station power system may obtain, based on the active capacity of each inverter unit and the reactive capacity of each inverter unit, an active capacity of the power-station voltage transformer unit (which may be referred to as an active capacity of a power station) and a reactive capacity of the power-station voltage transformer unit (which may be referred to as a reactive capacity of the power station); perform, based on the active capacity of the power station and received target active power of the power station (which may be target active power of the power station from a telecontrol terminal unit or a photovoltaic active-power automatic adjustment system), active power control on other MPPT controllers except the target MPPT controllers in the plurality of MPPT controllers coupled with each inverter unit; and perform reactive power control on each inverter unit based on the reactive capacity of the power station and received target reactive power of the power station (which may be target reactive power of the power station from a telecontrol terminal unit or a photovoltaic reactive-power automatic regulation system). In this way, the active capacity of each inverter unit and the reactive capacity of each inverter unit are obtained based on the target MPPT controllers coupled with the inverter unit; and then the active capacity of the power station and the reactive capacity of the power station are obtained based on the active capacity of each inverter unit and the reactive capacity of each inverter unit. Compared with obtaining an active capacity of a power station and a reactive capacity of the power station by setting sample inverter units, this is more accurate and credible. In addition, power control is performed on all of the inverter units (or MPPT controllers coupled with the inverter units) based on the obtained active capacity of the power station and the obtained reactive capacity of the power station, thereby avoiding a problem of coarse power control and management in the power-station power system. Power control precision is higher, and reliability is higher.

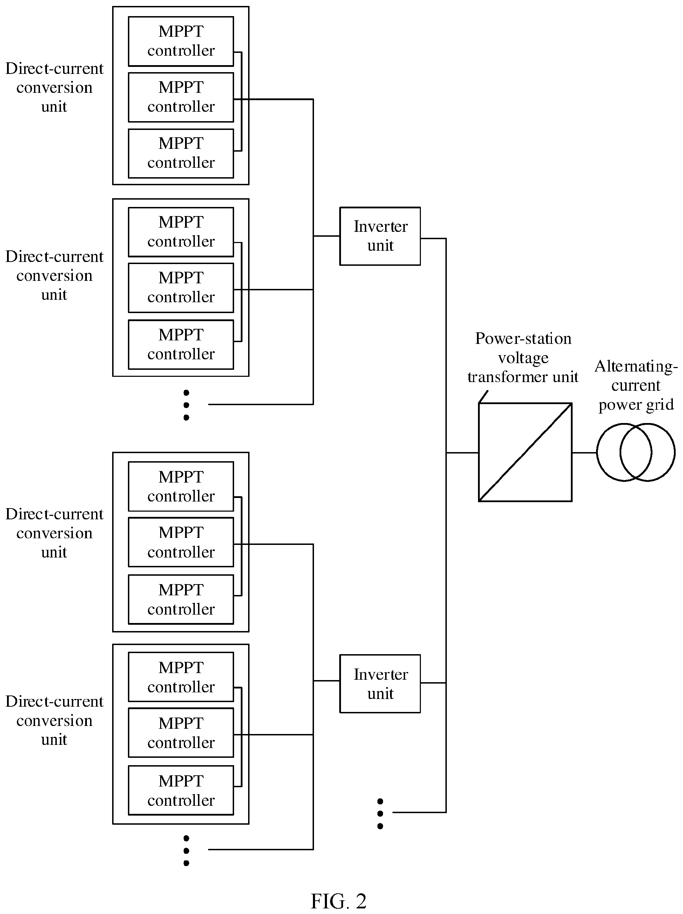

Refer to FIG. 2. FIG. 2 is a schematic diagram of a structure of a power-station power system according to this application. The power-station power system shown in FIG. 2 includes a power-station voltage transformer unit, a plurality of direct-current conversion units, and a plurality of inverter units. Each direct-current conversion unit in the plurality of direct-current conversion units may include a plurality of MPPT controllers. A direct-current end of each inverter unit may be coupled with MPPT controllers in a plurality of direct-current conversion units. An alternating-current end of each inverter unit may be coupled with and connected in parallel to one end of the power-station voltage transformer unit, and the other end of the power-station voltage transformer unit is coupled with an alternating-current power grid. In the power-station power system shown in FIG. 2, each of the MPPT controllers in each direct-current conversion unit is connected to a photovoltaic string (not shown in FIG. 2). Each direct-current conversion unit may perform voltage conversion (which may be voltage boosting, voltage decreasing, or the like) on a direct current output by each photovoltaic string, and output a current to a coupled inverter unit. Each inverter unit may perform inverse conversion on direct currents output by the direct-current conversion units, and output an alternating current obtained after the inverse conversion to the power-station voltage transformer unit. The power-station voltage transformer unit performs voltage conversion on the alternating current, and then supplies power to an electrical device, such as a battery, a communication base station, or household appliances in the alternating-current power grid.

In some feasible implementations, the power-station power system shown in FIG. 2 further includes a power-station controller (not shown in FIG. 2). The power-station controller may control the target MPPT controllers coupled with each inverter unit to perform maximum power point tracking on photovoltaic strings connected to the target MPPT controllers, so that direct-current conversion circuits (which may be direct-current conversion circuits in direct-current conversion units where the target MPPT controllers are located) associated with the target MPPT controllers output maximum active power. The power-station controller may obtain an active capacity of each inverter unit and a reactive capacity of each inverter unit based on maximum active power of a direct-current conversion circuit associated with each target MPPT controller. Herein, the target MPPT controllers coupled with each inverter unit are a part of all MPPT controllers coupled with the inverter unit. The power-station controller may obtain, based on the active capacity of each inverter unit and the reactive capacity of each inverter unit, an active capacity of the power station and a reactive capacity of the power station; and assign a corresponding active-power configuration value to each inverter unit based on the active capacity of the power station and received target active power of the power station, so that each inverter unit assigns active-power configuration values to other MPPT controllers except the target MPPT controllers in the plurality of MPPT controllers coupled with the inverter unit. Similarly, the power-station controller may assign a corresponding reactive-power configuration value to each inverter unit based on the reactive capacity of the power station and received target reactive power of the power station, so as to perform active power control on the other MPPT controllers based on the active-power configuration values of the other MPPT controllers, and to perform reactive power control on each inverter unit based on the reactive-power configuration value of each inverter unit. In this way, the active capacity of each inverter unit and the reactive capacity of each inverter unit are obtained based on the target MPPT controllers coupled with the inverter unit; and then the active capacity of the power station and the reactive capacity of the power station are obtained based on the active capacity of each inverter unit and the reactive capacity of each inverter unit. Compared with obtaining an active capacity of a power station and a reactive capacity of the power station by setting sample inverter units, this is more accurate and credible. In addition, power control is performed on all of the inverter units (or MPPT controllers coupled with the inverter units) based on the obtained active capacity of the power station and the obtained reactive capacity of the power station, thereby avoiding a problem of coarse power control and management in the power-station power system. Power control precision is higher, and reliability is higher.

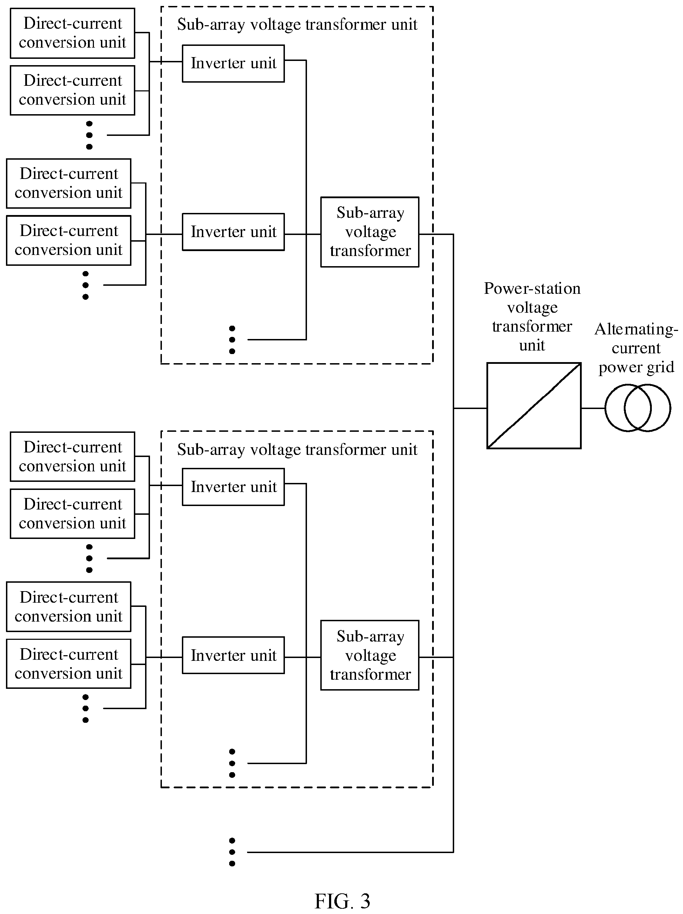

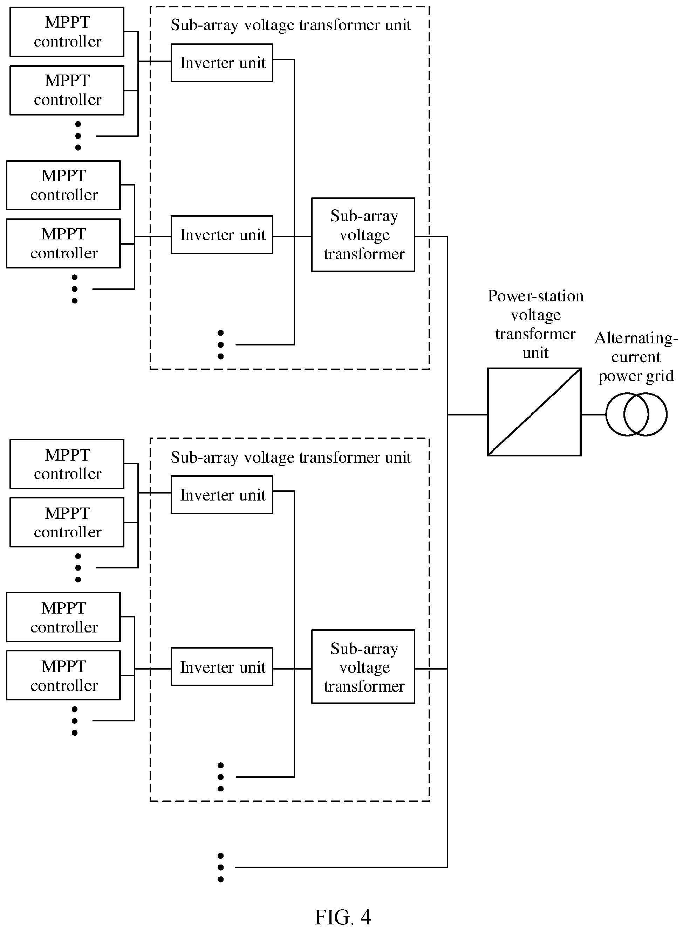

Refer to FIG. 3. FIG. 3 is another schematic diagram of a structure of a power-station power system according to this application. The power-station power system shown in FIG. 3 includes a power-station voltage transformer unit, a plurality of direct-current conversion units, and a plurality of inverter units, where one or more inverter units in the plurality of inverter units form one sub-array voltage transformer unit. In other words, the power-station power system includes a plurality of sub-array voltage transformer units, and each sub-array voltage transformer unit includes one or more inverter units. An alternating-current end of an inverter unit in each sub-array voltage transformer unit may be coupled with and connected in parallel to a sub-array transformer, so as to be coupled with the power-station voltage transformer unit by using the sub-array transformer. A direct-current end of each inverter unit may be coupled with MPPT controllers (not shown in FIG. 3) in a plurality of direct-current conversion units. Refer to FIG. 4. FIG. 4 is still another schematic diagram of a structure of a power-station power system according to this application. The power-station power system shown in FIG. 4 includes a power-station voltage transformer unit and a plurality of inverter units. Each inverter unit includes a plurality of direct-current conversion units (not shown in FIG. 4), that is, a plurality of direct-current conversion units may be integrated into an inverter unit. A direct-current end of each inverter unit may be coupled with a plurality of MPPT controllers (and may be coupled with a plurality of MPPT controllers by using a plurality of direct-current conversion units). One or more inverter units in the plurality of inverter units form one sub-array voltage transformer unit. In other words, the power-station power system includes a plurality of sub-array voltage transformer units, each sub-array voltage transformer unit includes one or more inverter units, and alternating-current ends of the inverter units in each sub-array voltage transformer unit may be coupled with and connected in parallel to a sub-array transformer, so as to be coupled with the power-station voltage transformer unit by using the sub-array transformer.

In some feasible implementations, the power-station power system shown in FIG. 3 or FIG. 4 further includes a power-station controller (not shown in FIG. 3 and FIG. 4). The power-station controller may control the target MPPT controllers coupled with each inverter unit to perform maximum power point tracking on photovoltaic strings connected to the target MPPT controllers, so that direct-current conversion circuits (which may be direct-current conversion circuits in direct-current conversion units where the target MPPT controllers are located) associated with the target MPPT controllers output maximum active power. The power-station controller may obtain an active capacity of each inverter unit and a reactive capacity of each inverter unit based on maximum active power of a direct-current conversion circuit associated with each target MPPT controller. Herein, the target MPPT controllers coupled with each inverter unit are a part of all MPPT controllers coupled with the inverter unit. The power-station controller may obtain, based on the active capacity of each inverter unit and the reactive capacity of each inverter unit, an active capacity of each sub-array voltage transformer unit and a reactive capacity of each sub-array voltage transformer unit; and then obtain, based on the active capacity of each sub-array voltage transformer unit and the reactive capacity of each sub-array voltage transformer unit, an active capacity of the power station and a reactive capacity of the power station. The power-station controller assigns a corresponding active-power configuration value to each sub-array voltage transformer unit based on the active capacity of the power station and received target active power of the power station, so that each sub-array voltage transformer unit assigns a corresponding active-power configuration value to each inverter unit; and each inverter unit assigns active-power configuration values to other MPPT controllers except the target MPPT controllers in the plurality of MPPT controllers coupled with the inverter unit. Similarly, the power-station controller may assign a corresponding reactive-power configuration value to each sub-array voltage transformer unit based on the reactive capacity of the power station and received target reactive power of the power station, so that each sub-array voltage transformer unit assigns a corresponding reactive-power configuration value to each inverter unit. The power-station controller may perform active power control on the other MPPT controllers based on the active-power configuration values of the other MPPT controllers, and perform reactive power control on each inverter unit based on the reactive-power configuration value of each inverter unit. In this way, the active capacity of each inverter unit and the reactive capacity of each inverter unit are obtained based on the target MPPT controllers coupled with the inverter unit; and then the active capacity of the power station and the reactive capacity of the power station are obtained based on the active capacity of each inverter unit and the reactive capacity of each inverter unit. Compared with obtaining an active capacity of a power station and a reactive capacity of the power station by setting sample inverter units, this is more accurate and credible. In addition, power control is performed on all of the inverter units (or MPPT controllers coupled with the inverter units) based on the obtained active capacity of the power station and the obtained reactive capacity of the power station, thereby avoiding a problem of coarse power control and management in the power-station power system. Power control precision is higher, and reliability is higher.

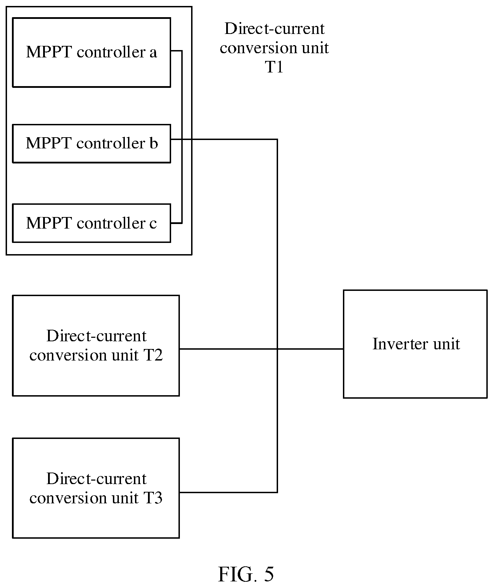

The following describes, with reference to FIG. 2 to FIG. 6, the power-station power system provided in embodiments of this application by using examples. In some feasible implementations, the power-station controller may control the target MPPT controllers coupled with each inverter unit to perform maximum power point tracking on photovoltaic strings connected to the target MPPT controllers, so as to obtain an active capacity of each inverter unit and a reactive capacity of each inverter unit. Herein, the target MPPT controllers coupled with each inverter unit may be MPPT controllers of a target direct-current conversion unit coupled with the inverter unit, where the target direct-current conversion unit may be some direct-current conversion units in all direct-current conversion units coupled with the inverter unit. Refer to FIG. 5. FIG. 5 is a schematic diagram of coupling an inverter unit with target MPPT controllers according to this application. As shown in FIG. 5, an alternating-current end of an inverter unit is coupled with a direct-current conversion unit T1, a direct-current conversion unit T2, and a direct-current conversion unit T3, where the direct-current conversion unit T1 is a target direct-current conversion unit. Then target MPPT controllers coupled with the inverter unit may be an MPPT controller a, an MPPT controller b, and an MPPT controller c in the direct-current conversion unit T1. Specifically, if any inverter unit is coupled with Y direct-current conversion units, and there are y target direct-current conversion units (that is, y is not greater than Y) in the direct-current conversion units coupled with the inverter unit, all MPPT controllers included in the target direct-current conversion units are target MPPT controllers. Then the active capacity of each inverter unit may be represented as follows: ${P}_{inv} = \frac{Y}{y} {\sum }_{i = 1}^{y} {P}_{DC_i} ,$ where

P_{DC_i} is a sum of maximum active power that is enabled to be output by direct-current conversion circuits (which may be direct-current conversion circuits in direct-current conversion units where the target MPPT controllers are located) associated with target MPPT controllers in an i^{th} target direct-current conversion unit of the y target direct-current conversion units after all the target MPPT controllers in the i^{th} target direct-current conversion unit perform maximum power point tracking on photovoltaic strings connected to these target MPPT controllers.

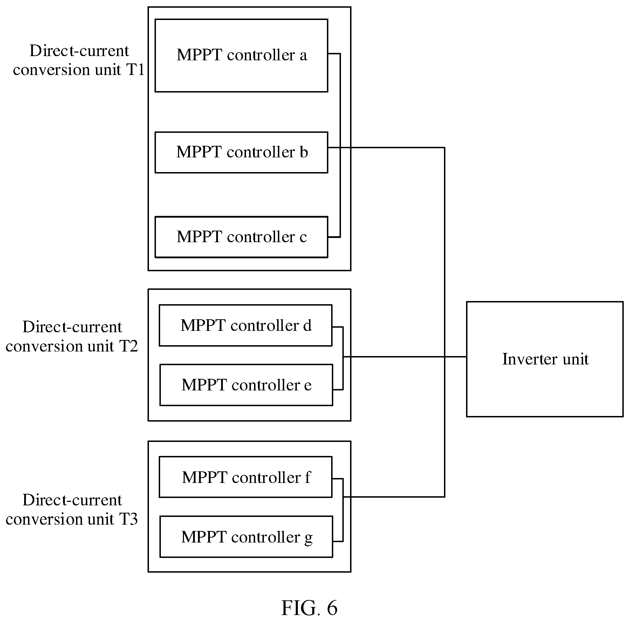

Optionally, the target MPPT controllers coupled with each inverter unit may be one or more MPPT controllers in the direct-current conversion units coupled with the inverter unit. Refer to FIG. 6. FIG. 6 is another schematic diagram of coupling an inverter unit with target MPPT controllers according to this application. As shown in FIG. 6, an alternating-current end of an inverter unit is coupled with a direct-current conversion unit T1, a direct-current conversion unit T2, and a direct-current conversion unit T3, where an MPPT controller a and an MPPT controller b in the direct-current conversion unit T1, an MPPT controller d in the direct-current conversion unit T2, and an MPPT controller f in the direct-current conversion unit T3 are target MPPT controllers coupled with the inverter unit. Specifically, if any inverter unit is coupled with Y direct-current conversion units, each direct-current conversion unit includes X MPPT controllers, and any direct-current conversion unit includes x target MPPT controllers, the active capacity of each inverter unit may be represented as follows: ${P}_{inv} = \frac{X}{x} {\sum }_{i = 1}^{Y} {P}_{DC_i} ,$ where

P_{DC_i} is a sum of maximum active power that is enabled to be output by direct-current conversion circuits associated with target MPPT controllers in an i^{th} target direct-current conversion unit of the Y target direct-current conversion units after all target MPPT controllers in the i^{th} target direct-current conversion unit perform maximum power point tracking on photovoltaic strings connected to these target MPPT controllers. In this way, target MPPT controllers are selected from the MPPT controllers coupled with each inverter unit, and each target MPPT controller is controlled to perform maximum power point tracking on a photovoltaic string connected to the target MPPT controller, so that the direct-current conversion circuit associated with each target MPPT controller outputs maximum active power, and then active power of each inverter unit and reactive power of each inverter unit may be obtained based on the maximum active power of the direct-current conversion circuit associated with each target MPPT controller.

Optionally, when a direct-current conversion unit is integrated in an inverter unit (as shown in FIG. 4), the target MPPT controllers coupled with each inverter unit may be some MPPT controllers in a plurality of MPPT controllers coupled with the inverter unit. Specifically, if any inverter unit is coupled with X MPPT controllers, and the MPPT controllers coupled with any inverter unit include x target MPPT controllers, the active capacity of each inverter unit may be represented as follows: ${P}_{inv} = \frac{X}{x} {\sum }_{i = 1}^{x} {P}_{MPPT_i} ,$ where

P_{MPPT_i} is maximum active power that is enabled to be output by a direct-current conversion circuit associated with an i^{th} target MPPT controller in the x target MPPT controllers after the i^{th} target MPPT controller performs maximum power point tracking on a photovoltaic string connected to the i^{th} target MPPT controller. In this way, target MPPT controllers are selected from the MPPT controllers coupled with each inverter unit, and each target MPPT controller is controlled to perform maximum power point tracking on a photovoltaic string connected to the target MPPT controller, so that the direct-current conversion circuit associated with each target MPPT controller outputs maximum active power, and then active power of each inverter unit and reactive power of each inverter unit may be obtained based on the maximum active power of the direct-current conversion circuit associated with each target MPPT controller. The active capacity of each inverter unit and the reactive capacity of each inverter unit that are obtained based on the target MPPT controllers of each inverter unit are closer to an actual active capacity of the inverter unit and an actual reactive capacity of the inverter unit. The obtained active capacity and the obtained reactive capacity are highly accurate.

In some feasible implementations, the power-station controller may obtain, based on the active capacity of each inverter unit and the reactive capacity of each inverter unit, an active capacity of each sub-array voltage transformer unit and a reactive capacity of each sub-array voltage transformer unit; and then obtain, based on the active capacity of each sub-array voltage transformer unit and the reactive capacity of each sub-array voltage transformer unit, an active capacity of the power station and a reactive capacity of the power station. Specifically, if each sub-array voltage transformer unit includes m inverter units, and the power-station voltage transformer unit is coupled with n sub-array voltage transformer units, the active capacity of each sub-array voltage transformer unit may be represented as follows: ${P}_{arr} = {\sum }_{i = 1}^{m} {P}_{inv_i} ,$ where

P_{inv_i} is an active capacity of an i^{th} inverter unit in the m inverter units. The active capacity of the power station can be represented as follows: ${P}_{plt} = {\sum }_{i = 1}^{n} {P}_{arr_i} ,$ where

P_{arr_i} is an active capacity of an i^{th} sub-array voltage transformer unit in the n sub-array voltage transformer units. In addition, the reactive capacity of each inverter unit may be represented as follows: ${Q}_{inv} = \sqrt{{S}_{inv}^{2} - {P}_{inv}^{2}} ,$ where

Pᵢₙᵥ is the active capacity of each inverter unit, and Sᵢₙᵥ is maximum apparent power of each inverter unit. A process of obtaining the reactive capacity of each sub-array voltage transformer unit and the reactive capacity of the power station based on the reactive capacity of each inverter unit is similar to the foregoing process of obtaining the active capacity of each sub-array voltage transformer unit and the active capacity of the power station based on the active capacity of each inverter unit. Details are not described herein. The power-station controller obtains, based on the active capacity of each inverter unit and the reactive capacity of each inverter unit, the active capacity of the power station and the reactive capacity of the power station. Compared with obtaining an active capacity of a power station and a reactive capacity of the power station by setting sample inverter units, this is more accurate and credible.

In some feasible implementations, a power control mode of the power-station controller may be that active power control takes precedence, and the power-station controller is further configured to: when received target active power of the power station is less than the active capacity of the power station, control, based on the active capacity of the power station and the target active power of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station. Specifically, the power-station controller may obtain, based on the active capacity of the power station, the target active power of the power station, and the active capacity of each sub-array voltage transformer unit, an active-power configuration value of each sub-array voltage transformer unit. Herein, the active-power configuration value of each sub-array voltage transformer unit may be represented as follows: ${P}_{arr_o_i} = \frac{{P}_{ord}}{{P}_{plt}} {P}_{arr_i} ,$ where

P_{arr_o_i} is an active-power configuration value of an i^{th} sub-array voltage transformer unit, P_{ord} is the target active power of the power station, Pₚₗₜ is the active capacity of the power station, P_{arr_i} is an active capacity of the i^{th} sub-array voltage transformer unit. In other words, a ratio of the active-power configuration value of each sub-array voltage transformer unit to the active capacity of each sub-array voltage transformer unit is equal to: a ratio of the target active power of the power station to the active capacity of the power station. Further, each sub-array voltage transformer unit may send an active-power configuration value to each inverter unit based on the active capacity of the sub-array voltage transformer unit, the assigned active-power configuration value, and the active capacity of each inverter unit. Herein, the active-power configuration value of each inverter unit may be represented as follows: ${P}_{inv_o_j} = \frac{{P}_{arr_o}}{{P}_{arr}} {P}_{inv_j} ,$ where

P_{inv_o_j} is an active-power configuration value of a j^{th} inverter unit, P_{inv_j} is an active capacity of the j^{th} inverter unit, P_{arr_o} is an active-power configuration value of a sub-array voltage transformer unit associated with the j^{th} inverter unit, and Pₐᵣᵣ is an active capacity of the sub-array voltage transformer unit associated with the j^{th} inverter unit. In other words, a ratio of a corresponding active-power configuration value of any inverter unit to an active capacity of the inverter unit is equal to: a ratio of a corresponding active-power configuration value of a sub-array voltage transformer unit associated with the inverter unit to an active capacity of the sub-array voltage transformer unit associated with the inverter unit. Further, each inverter unit may send, based on the active-power configuration value of the inverter unit and a sum of maximum power point power corresponding to the target MPPT controllers associated with the inverter unit, active-power configuration values to other MPPT controllers except the target MPPT controllers in the plurality of MPPT controllers coupled with the inverter unit. Herein, the target MPPT controllers coupled with each inverter unit may be MPPT controllers of a target direct-current conversion unit coupled with the inverter unit. If any inverter unit is coupled with Y direct-current conversion units, there are y target direct-current conversion units in the direct-current conversion units coupled with each inverter unit, and each direct-current conversion unit includes X MPPT controllers, active-power configuration values of the other MPPT controllers may be represented as follows: ${P}_{MPPT_o_k} = \left({P}_{inv_o_j}-{\sum }_{i = 1}^{y} {P}_{DC_i}\right) / \left(Y-y\right) ∗ X ,$ where

P_{inv_o_j} is an active-power configuration value of a j^{th} inverter unit, and P_{DC_i} is a sum of maximum active power that is enabled to be output by direct-current conversion circuits (which may be direct-current conversion circuits in direct-current conversion units where the target MPPT controllers are located) associated with target MPPT controllers in an i^{th} target direct-current conversion unit of the y target direct-current conversion units after all target MPPT controllers in the i^{th} target direct-current conversion unit perform maximum power point tracking on photovoltaic strings connected to these target MPPT controllers. Optionally, the target MPPT controllers coupled with each inverter unit may be one or more MPPT controllers in the direct-current conversion units coupled with the inverter unit. If any inverter unit is coupled with Y direct-current conversion units, there are y target direct-current conversion units in the direct-current conversion units coupled with each inverter unit, and each direct-current conversion unit includes X MPPT controllers, active-power configuration values of the other MPPT controllers may be represented as follows: ${P}_{MPPT_o_k} = \left({P}_{inv_o_j}-{\sum }_{i = 1}^{Y} {P}_{DC_i}\right) / Y ∗ \left(X-x\right) ,$ where

P_{inv_o_j} is an active-power configuration value of a j^{th} inverter unit, and P_{DC_i} is a sum of maximum active power that is enabled to be output by direct-current conversion circuits associated with target MPPT controllers in an i^{th} target direct-current conversion unit of the Y target direct-current conversion units after all target MPPT controllers in the i^{th} target direct-current conversion unit perform maximum power point tracking on photovoltaic strings connected to these target MPPT controllers. Optionally, when a direct-current conversion unit is integrated in an inverter unit (as shown in FIG. 4), the target MPPT controllers coupled with each inverter unit may be some MPPT controllers in a plurality of MPPT controllers coupled with the inverter unit. If any inverter unit is coupled with X MPPT controllers, and the MPPT controllers coupled with any inverter unit include x target MPPT controllers, active-power configuration values of the other MPPT controllers may be represented as follows: ${P}_{MPPT_o_k} = \left({P}_{inv_o_j}-{\sum }_{i = 1}^{x} {P}_{MPPT_i}\right) / \left(X-x\right) ,$ where

P_{inv_o_j} is an active-power configuration value of a j^{th} inverter unit, and P_{MPPT_i} is maximum active power that is enabled to be output by a direct-current conversion circuit associated with an i^{th} target MPPT controller in the x target MPPT controllers coupled with the j^{th} inverter unit after the i^{th} target MPPT controller performs maximum power point tracking on a photovoltaic string connected to the i^{th} target MPPT controller. It may be understood that, in the power control mode in which active power control takes precedence, when received target active power of the power station is less than the active capacity of the power station, the power-station controller assigns an active-power configuration value to each sub-array voltage transformer unit based on the active capacity of the power station, the target active power of the power station, and the active-power configuration value of each sub-array voltage transformer unit; each sub-array voltage transformer unit sends an active-power configuration value to each inverter unit based on the active capacity of the sub-array voltage transformer unit, the assigned active-power configuration value, and the active capacity of each inverter unit; and each inverter unit sends, based on the assigned active-power configuration value and a sum of maximum power point power corresponding to the target MPPT controllers associated with the inverter unit, active-power configuration values to other MPPT controllers except the target MPPT controllers in the plurality of MPPT controllers coupled with the inverter unit, so that a sum of active power output by direct-current conversion circuits associated with the target MPPT controllers coupled with all of the inverter units and associated with the other MPPT controllers, is equal to the target active power of the power station. In this way, the power-station controller performs power control on the MPPT controllers coupled with all of the inverter units based on the obtained active capacity of the power station and the obtained reactive capacity of the power station. Power control precision is high, and reliability is high.

In some feasible implementations, a power control mode of the power-station controller may be that active power control takes precedence, and the power-station controller is further configured to: when received target active power of the power station is less than the active capacity of the power station, update, based on the target active power of the power station and maximum apparent power of the power station, the reactive capacity of the power station; and perform reactive power control on each inverter unit based on the target reactive power of the power station and the updated reactive capacity of the power station, so that a sum of reactive power output by all of the inverter units is equal to the target reactive power of the power station or the updated reactive capacity of the power station. Specifically, the reactive capacity of the power station may be represented as follows: ${Q}_{plt} = \sqrt{{S}_{plt}^{2} - {P}_{plt}^{2}} ,$ where

Sₚₗₜ is the maximum apparent power of the power station, and Pₚₗₜ is the active capacity of the power station. When the target active power of the power station is less than the active capacity of the power station, the updated reactive capacity of the power station may be represented as follows: ${Q}_{plt} = \sqrt{{S}_{plt}^{2} - {P}_{ord}^{2}} ,$ where

Sₚₗₜ is the maximum apparent power of the power station, and P_{ord} is the target active power of the power station. It may be understood that, because the target active power of the power station is less than the active capacity of the power station, the reactive capacity of the power station after the update is greater than the reactive capacity of the power station before the update. In this way, the reactive capacity of the power station is adjusted when the target active power is relatively small, so as to make full use of power resources of the power-station power system. The power-station controller may obtain, based on the updated reactive capacity of the power station, the target reactive power of the power station, and the reactive capacity of each sub-array voltage transformer unit, a reactive-power configuration value of each sub-array voltage transformer unit; and when the target reactive power of the power station is greater than the updated reactive capacity of the power station, adjust a value of the target reactive power of the power station to be the same as the updated reactive capacity of the power station. Herein, the reactive-power configuration value of each sub-array voltage transformer unit may be represented as follows: ${Q}_{arr_o_i} = \frac{{Q}_{ord}}{{Q}_{plt}} {Q}_{arr_i} ,$ where

Q_{arr_o_i} is a reactive-power configuration value of an i^{th} sub-array voltage transformer unit, Q_{ord} is the target reactive power of the power station, Qₚₗₜ is the updated reactive capacity of the power station, and Q_{arr_i} is a reactive capacity of the i^{th} sub-array voltage transformer unit. In other words, a ratio of the reactive-power configuration value of each sub-array voltage transformer unit to the reactive capacity of each sub-array voltage transformer unit is equal to: a ratio of the target reactive power of the power station to the updated reactive capacity of the power station. Further, each sub-array voltage transformer unit may send a reactive-power configuration value to each inverter unit based on the reactive capacity of the sub-array voltage transformer unit, the assigned reactive-power configuration value, and the reactive capacity of each inverter unit. Herein, the reactive-power configuration value of each inverter unit may be represented as follows: ${Q}_{inv_o_j} = \frac{{Q}_{arr_o}}{{Q}_{arr}} {Q}_{inv_j} ,$ where

Q_{inv_o_j} is a reactive-power configuration value of a j^{th} inverter unit, Q_{inv_j} is a reactive capacity of the j^{th} inverter unit, Q_{arr_o} is a reactive-power configuration value of a sub-array voltage transformer unit associated with the j^{th} inverter unit, and Qₐᵣᵣ is a reactive capacity of the sub-array voltage transformer unit associated with the j^{th} inverter unit. In other words, a ratio of a corresponding reactive-power configuration value of any inverter unit to a reactive capacity of the inverter unit is equal to: a ratio of a corresponding reactive-power configuration value of a sub-array voltage transformer unit associated with the inverter unit to a reactive capacity of the sub-array voltage transformer unit associated with the inverter unit. It may be understood that, in the power control mode in which active power control takes precedence, when received target reactive power of the power station is less than the reactive capacity of the power station, the power-station controller assigns a reactive-power configuration value to each sub-array voltage transformer unit based on the updated reactive capacity of the power station, the target reactive power of the power station, and the reactive-power configuration value of each sub-array voltage transformer unit; and each sub-array voltage transformer unit sends a reactive-power configuration value to each inverter unit based on the reactive capacity of the sub-array voltage transformer unit, the assigned reactive-power configuration value, and the reactive capacity of each inverter unit, so that each inverter unit performs reactive power control based on the reactive-power configuration value assigned to the inverter unit. In this way, a sum of reactive power of all of the inverter units is equal to the target reactive power of the power station or the updated reactive capacity of the power station (when the target reactive power of the power station is greater than the updated reactive capacity of the power station), thereby making full use of power resources with high reactive power control precision.

In some feasible implementations, a power control mode of the power-station controller may be that active power control takes precedence, and the power-station controller is further configured to: when received target active power of the power station is not less than the active capacity of the power station, control each MPPT controller coupled with each inverter to perform maximum power point tracking on a photovoltaic string connected to the MPPT controller, so that direct-current conversion circuits associated with the plurality of MPPT controllers output maximum active power. It may be understood that, when the target active power of the power station is greater than or equal to the active capacity of the power station, the power-station controller controls all inverter units in the power-station power system, so that each MPPT controller coupled with each inverter unit performs maximum power point tracking on a photovoltaic string connected to the MPPT controller, that is, a direct-current conversion circuit associated with each MPPT controller outputs maximum active power, so that active power output to an alternating-current power grid can meet (or is close to) the target active power of the power station, thereby making full use of power resources with high reactive power control precision.

In some feasible implementations, a power control mode of the power-station controller may be that active power control takes precedence; and when received target active power of the power station is not less than the active capacity of the power station, the power-station controller may perform reactive power control on each inverter unit based on the target reactive power of the power station and the reactive capacity of the power station, so that a sum of reactive power output by the all of inverter units is equal to the target reactive power of the power station or the updated reactive capacity of the power station. Specifically, the power-station controller may obtain, based on the reactive capacity of the power station, the target reactive power of the power station, and the reactive capacity of each sub-array voltage transformer unit, a reactive-power configuration value of each sub-array voltage transformer unit; and when the target reactive power of the power station is greater than the reactive capacity of the power station, adjust a value of the target reactive power of the power station to be the same as the reactive capacity of the power station. Herein, the reactive-power configuration value of each sub-array voltage transformer unit may be represented as follows: ${Q}_{arr_o_i} = \frac{{Q}_{ord}}{{Q}_{plt}} {Q}_{arr_i} ,$ where

Q_{arr_o_i} is a reactive-power configuration value of an i^{th} sub-array voltage transformer unit, Q_{ord} is the target reactive power of the power station, Qₚₗₜ is the reactive capacity of the power station, and Q_{arr_i} is a reactive capacity of the i^{th} sub-array voltage transformer unit. In other words, a ratio of the reactive-power configuration value of each sub-array voltage transformer unit to the reactive capacity of each sub-array voltage transformer unit is equal to: a ratio of the target reactive power of the power station to the reactive capacity of the power station. Further, each sub-array voltage transformer unit may send a reactive-power configuration value to each inverter unit based on the reactive capacity of the sub-array voltage transformer unit, the assigned reactive-power configuration value, and the reactive capacity of each inverter unit. Herein, the reactive-power configuration value of each inverter unit may be represented as follows: ${Q}_{inv_o_j} = \frac{{Q}_{arr_o}}{{Q}_{arr}} {Q}_{inv_j} ,$ where

Q_{inv_o_j} is a reactive-power configuration value of a j^{th} inverter unit, Q_{inv_j} is a reactive capacity of the j^{th} inverter unit, Q_{arr_o} is a reactive-power configuration value of a sub-array voltage transformer unit associated with the j^{th} inverter unit, and Qₐᵣᵣ is a reactive capacity of the sub-array voltage transformer unit associated with the j^{th} inverter unit. In other words, a ratio of a corresponding reactive-power configuration value of any inverter unit to a reactive capacity of the inverter unit is equal to: a ratio of a corresponding reactive-power configuration value of a sub-array voltage transformer unit associated with the inverter unit to a reactive capacity of the sub-array voltage transformer unit associated with the inverter unit. It may be understood that, in the power control mode in which active power control takes precedence, when received target reactive power of the power station is less than the reactive capacity of the power station, the power-station controller assigns a reactive-power configuration value to each sub-array voltage transformer unit based on the reactive capacity of the power station, the target reactive power of the power station, and the reactive-power configuration value of each sub-array voltage transformer unit; and each sub-array voltage transformer unit sends a reactive-power configuration value to each inverter unit based on the reactive capacity of the sub-array voltage transformer unit, the assigned reactive-power configuration value, and the reactive capacity of each inverter unit, so that each inverter unit performs reactive power control based on the reactive-power configuration value assigned to the inverter unit. In this way, a sum of reactive power of all of the inverter units is equal to the target reactive power of the power station or the reactive capacity of the power station (when the target reactive power of the power station is greater than the reactive capacity of the power station), thereby making full use of power resources with high reactive power control precision.

In some feasible implementations, a power control mode of the power-station controller may be that reactive power control takes precedence; and the power-station controller may perform reactive power control on each inverter unit based on the target reactive power of the power station and the reactive capacity of the power station, so that a sum of reactive power output by all of the inverter units is equal to the target reactive power of the power station. Specifically, the power-station controller may assign a reactive-power configuration value to each sub-array voltage transformer unit based on the reactive capacity of the power station, the target reactive power of the power station, and the reactive-power configuration value of each sub-array voltage transformer unit; and each sub-array voltage transformer unit sends a reactive-power configuration value to each inverter unit based on the reactive capacity of the sub-array voltage transformer unit, the assigned reactive-power configuration value, and the reactive capacity of each inverter unit, so as to control each inverter unit to perform, based on the reactive-power configuration value assigned to the inverter unit, reactive power control. In this way, a sum of reactive power of all of the inverter units is equal to the target reactive power of the power station, thereby making full use of power resources with high reactive power control precision. The foregoing process of assigning reactive-power configuration values to each sub-array voltage transformer unit and each inverter unit is the same as the foregoing process of assigning reactive-power configuration values when the power control mode of the power-station controller is that active power control takes precedence, and details are not described herein again.

In some feasible implementations, a power control mode of the power-station controller may be that reactive power control takes precedence; and when the target reactive power of the power station is less than the reactive capacity of the power station and the target active power of the power station is less than the active capacity of the power station, the power-station controller may control, based on the target active power of the power station and the active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station. Specifically, in the power control mode in which reactive power control takes precedence, when received target reactive power of the power station is less than the reactive capacity of the power station and the target active power of the power station is less than the active capacity of the power station, the power-station controller assigns an active-power configuration value to each sub-array voltage transformer unit based on the active capacity of the power station, the target active power of the power station, and the active-power configuration value of each sub-array voltage transformer unit; each sub-array voltage transformer unit sends an active-power configuration value to each inverter unit based on the active capacity of the sub-array voltage transformer unit, the assigned active-power configuration value, and the active capacity of each inverter unit; and each inverter unit sends, based on the assigned active-power configuration value and a sum of maximum power point power corresponding to the target MPPT controllers associated with the inverter unit, active-power configuration values to other MPPT controllers except the target MPPT controllers in the plurality of MPPT controllers coupled with the inverter unit, so that a sum of active power output by direct-current conversion circuits associated with the target MPPT controllers coupled with all of the inverter units and associated with the other MPPT controllers, is equal to the target active power of the power station. In this way, the power-station controller performs power control on the MPPT controllers coupled with all of the inverter units based on the obtained active capacity of the power station and the obtained reactive capacity of the power station. Power control precision is high, and reliability is high. The foregoing process of assigning active -power configuration values to each sub-array voltage transformer unit, each inverter unit, and each MPPT controller is the same as the foregoing process of assigning active-power configuration values when the power control mode of the power-station controller is that active power control takes precedence, and details are not described herein again.

In some feasible implementations, a power control mode of the power-station controller may be that reactive power control takes precedence; and when the target reactive power of the power station is less than the reactive capacity of the power station and the target active power of the power station is not less than the active capacity of the power station, the power-station controller may control each MPPT controller coupled with each inverter unit to perform maximum power point tracking on a photovoltaic string connected to the MPPT controller, so that direct-current conversion circuits associated with the plurality of MPPT controllers output maximum active power. It may be understood that, when the target active power of the power station is greater than or equal to the active capacity of the power station, the power-station controller controls all inverter units in the power-station power system, so that each MPPT controller coupled with each inverter unit performs maximum power point tracking on a photovoltaic string connected to the MPPT controller, that is, a direct-current conversion circuit associated with each MPPT controller outputs maximum active power, so that active power output to an alternating-current power grid can meet (or is close to) the target active power of the power station, thereby making full use of power resources with high reactive power control precision.

In some feasible implementations, a power control mode of the power-station controller may be that reactive power control takes precedence; and when the target reactive power of the power station is not less than the reactive capacity of the power station, the power-station controller may update, based on the target reactive power of the power station and maximum apparent power of the power station, the active capacity of the power station; and control, based on the target active power of the power station and the updated active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station or the updated active capacity of the power station. Specifically, the active capacity of the power station may be represented as follows: ${P}_{plt} = \sqrt{{S}_{plt}^{2} - {Q}_{plt}^{2}} ,$ where

Sₚₗₜ is the maximum apparent power of the power station, and Qₚₗₜ is the reactive capacity of the power station. When the target reactive power of the power station is greater than the reactive capacity of the power station, the updated active capacity of the power station may be represented as follows: ${P}_{plt} = \sqrt{{S}_{plt}^{2} - {Q}_{ord}^{2}} ,$ where

Sₚₗₜ is the maximum apparent power of the power station, and Q_{ord} is the target reactive power of the power station. It may be understood that, because the target reactive power of the power station is greater than the reactive capacity of the power station, the active capacity of the power station after the update is less than the active capacity of the power station before the update. In this way, the active capacity of the power station is adjusted when the target reactive power is relatively large, so as to make full use of power resources of the power-station power system. The power-station controller may obtain, based on the updated active capacity of the power station, the target active power of the power station, and the active capacity of each sub-array voltage transformer unit, an active-power configuration value of each sub-array voltage transformer unit; and when the target active power of the power station is greater than the updated active capacity of the power station, adjust a value of the target active power of the power station to be the same as the updated active capacity of the power station. In the power control mode in which reactive power control takes precedence, when received target reactive power is not less than the reactive capacity of the power station, the power-station controller assigns an active-power configuration value to each sub-array voltage transformer unit based on the updated active capacity of the power station, the target active power of the power station, and the active-power configuration value of each sub-array voltage transformer unit; each sub-array voltage transformer unit sends an active-power configuration value to each inverter unit based on the active capacity of the sub-array voltage transformer unit, the assigned active-power configuration value, and the active capacity of each inverter unit; and each inverter unit sends, based on the assigned active-power configuration value and a sum of maximum power point power corresponding to the target MPPT controllers associated with all of the inverter unit, active-power configuration values to other MPPT controllers except the target MPPT controllers in the plurality of MPPT controllers coupled with the inverter unit, so that a sum of active power output by direct-current conversion circuits associated with the target MPPT controllers coupled with all of the inverter units and associated with the other MPPT controllers, is equal to the target active power of the power station or the updated active capacity of the power station (when the target active power of the power station is greater than the updated active capacity of the power station), thereby making full use of power resources with high power control precision and high reliability.

In this application, each inverter unit in the power-station power system may obtain some MPPT controllers from a plurality of MPPT controllers coupled with the inverter unit, and use them as target MPPT controllers, so that an active capacity of each inverter unit and a reactive capacity of each inverter unit are obtained based on the target MPPT controllers. The power-station controller of the power-station power system may obtain, based on the active capacity of each inverter unit and the reactive capacity of each inverter unit, an active capacity of the power-station voltage transformer unit (which may be referred to as an active capacity of the power station) and a reactive capacity of the power-station voltage transformer unit (which may be referred to as a reactive capacity of the power station); perform, based on the active capacity of the power station and received target active power of the power station (which may be target active power of the power station from a telecontrol terminal unit or a photovoltaic active-power automatic adjustment system), active power control on other MPPT controllers except the target MPPT controllers in the plurality of MPPT controllers coupled with each inverter unit; and perform reactive power control on each inverter unit based on the reactive capacity of the power station and received target reactive power of the power station. In this way, the active capacity of each inverter unit and the reactive capacity of each inverter unit are obtained based on the target MPPT controllers coupled with the inverter unit; and then the active capacity of the power station and the reactive capacity of the power station are obtained based on the active capacity of each inverter unit and the reactive capacity of each inverter unit. Compared with obtaining an active capacity of a power station and a reactive capacity of the power station by setting sample inverter units, this is more accurate and credible. In addition, power control is performed on all of the inverter units (or MPPT controllers coupled with the inverter units) based on the obtained active capacity of the power station and the obtained reactive capacity of the power station, thereby avoiding a problem of coarse power control and management in the power-station power system. Power control precision is higher, and reliability is higher.

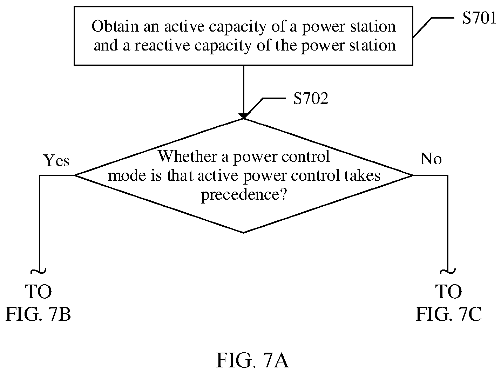

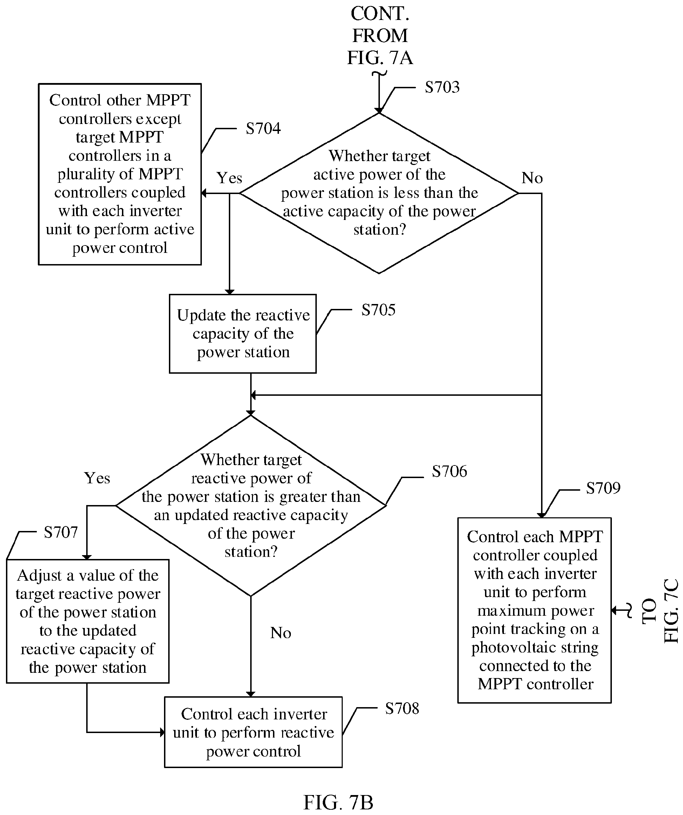

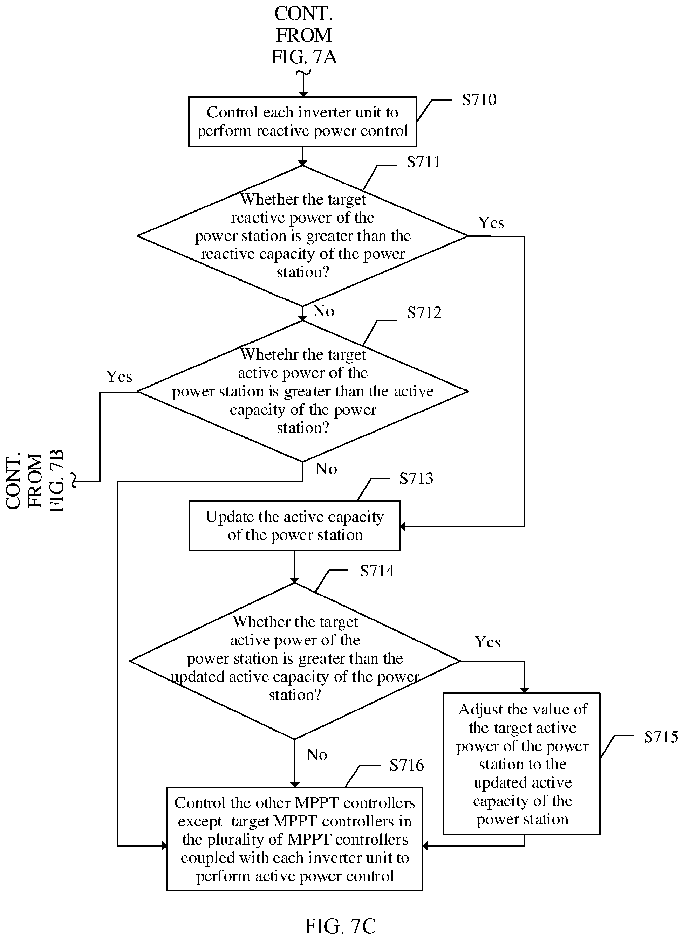

Refer to FIG. 7A to FIG. 7C. FIG. 7A to FIG. 7C are a schematic flowchart of a method for controlling power of a power-station power system according to this application. The method for controlling power of a power-station power system provided in this application is applicable to any power-station power system shown in FIG. 2 to FIG. 6. The power-station power system includes a power-station controller, a power-station voltage transformer unit, a plurality of direct-current conversion units, and a plurality of inverter units. Alternating-current ends of the plurality of inverter units are coupled with and connected in parallel to the power-station voltage transformer unit, and a direct-current end of any inverter unit is coupled with maximum power point tracking MPPT controllers of a plurality of direct-current conversion units. As shown in FIG. 7A to FIG. 7C, the method for controlling power of a power-station power system provided in this application includes the following steps.

S701: Obtain an active capacity of a power station and a reactive capacity of the power station.

In some feasible implementations, maximum power point tracking may be performed, by using target MPPT controllers coupled with each inverter unit, on photovoltaic strings connected to the target MPPT controllers, so as to obtain an active capacity of each inverter unit and a reactive capacity of each inverter unit. Herein, the target MPPT controllers coupled with each inverter unit may be MPPT controllers of a target direct-current conversion unit coupled with the inverter unit, where the target direct-current conversion unit may be some direct-current conversion units in all direct-current conversion units coupled with the inverter unit. Refer to FIG. 5 again. An alternating-current end of an inverter unit in FIG. 5 is coupled with a direct-current conversion unit T1, a direct-current conversion unit T2, and a direct-current conversion unit T3, where the direct-current conversion unit T1 is a target direct-current conversion unit. Then target MPPT controllers coupled with the inverter unit may be an MPPT controller a, an MPPT controller b, and an MPPT controller c in the direct-current conversion unit T1. Optionally, the target MPPT controllers coupled with each inverter unit may be one or more MPPT controllers in direct-current conversion units coupled with the inverter unit. Refer to FIG. 6 again. An alternating-current end of an inverter unit in FIG. 6 is coupled with a direct-current conversion unit T1, a direct-current conversion unit T2, and a direct-current conversion unit T3, where an MPPT controller a and an MPPT controller b in the direct-current conversion unit T1, an MPPT controller d in the direct-current conversion unit T2, and an MPPT controller f in the direct-current conversion unit T3 are target MPPT controllers coupled with the inverter unit. Each inverter unit controls each target MPPT controller coupled with the inverter unit to perform maximum power point tracking on a photovoltaic string connected to the target MPPT controller, so that a direct-current conversion circuit associated with each target MPPT controller outputs maximum active power, and then an active capacity of each inverter unit and a reactive capacity of each inverter unit may be obtained based on the maximum active power of the direct-current conversion circuit associated with each target MPPT controller. The active capacity of each inverter unit and the reactive capacity of each inverter unit that are obtained based on the target MPPT controllers of each inverter unit are closer to an actual active capacity of the inverter unit and an actual reactive capacity of the inverter unit. The active capacity and the reactive capacity are highly accurate.

In some feasible implementations, the power-station controller may obtain, based on the active capacity of each inverter unit and the reactive capacity of each inverter unit, an active capacity of each sub-array voltage transformer unit and a reactive capacity of each sub-array voltage transformer unit; and then obtain, based on the active capacity of each sub-array voltage transformer unit and the reactive capacity of each sub-array voltage transformer unit, an active capacity of the power station and a reactive capacity of the power station. In this way, the power-station controller obtains, based on the active capacity of each inverter unit and the reactive capacity of each inverter unit, the active capacity of the power station and the reactive capacity of the power station. Compared with obtaining an active capacity of a power station and a reactive capacity of the power station by setting sample inverter units, this is more accurate and credible.

S702: Determine whether a power control mode is that active power control takes precedence; and if it is determined that active power control takes precedence, perform step S703; or if a determining result is No, perform step S710.

S703: Determine whether target active power of the power station is less than the active capacity of the power station; and if a determining result is Yes, perform steps S704 and S705; or if a determining result is No, perform steps S706 and S709.

S704: Control other MPPT controllers except target MPPT controllers in a plurality of MPPT controllers coupled with each inverter unit to perform active power control.

In some feasible implementations, a power control mode of the power-station controller is that active power control takes precedence; and when received target active power of the power station is less than the active capacity of the power station, the power-station controller may control, based on the active capacity of the power station and the target active power of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station. Specifically, the power-station controller may obtain, based on the active capacity of the power station, the target active power of the power station, and the active capacity of each sub-array voltage transformer unit, an active-power configuration value of each sub-array voltage transformer unit. Herein, the active-power configuration value of each sub-array voltage transformer unit may be represented as follows: ${P}_{arr_o_i} = \frac{{P}_{ord}}{{P}_{plt}} {P}_{arr_i} ,$ where

P_{arr_o_i} is an active-power configuration value of an i^{th} sub-array voltage transformer unit, P_{ord} is the target active power of the power station, Pₚₗₜ is the active capacity of the power station, and P_{arr_i} is an active capacity of the i^{th} sub-array voltage transformer unit. In other words, a ratio of the active-power configuration value of each sub-array voltage transformer unit to the active capacity of each sub-array voltage transformer unit is equal to: a ratio of the target active power of the power station to the active capacity of the power station. Further, each sub-array voltage transformer unit may send an active-power configuration value to each inverter unit based on the active capacity of the sub-array voltage transformer unit, the assigned active-power configuration value, and the active capacity of each inverter unit. Herein, the active-power configuration value of each inverter unit may be represented as follows: ${P}_{inv_o_j} = \frac{{P}_{arr_o}}{{P}_{arr}} {P}_{inv_j} ,$ where

P_{inv_o_j} is an active-power configuration value of a j^{th} inverter unit, P_{inv_j} is an active capacity of the jth inverter unit, P_{arr_o} is an active-power configuration value of a sub-array voltage transformer unit associated with the j^{th} inverter unit, and Pₐᵣᵣ is an active capacity of the sub-array voltage transformer unit associated with the j^{th} inverter unit. In other words, a ratio of a corresponding active-power configuration value of any inverter unit to an active capacity of the inverter unit is equal to: a ratio of a corresponding active-power configuration value of a sub-array voltage transformer unit associated with the inverter unit to an active capacity of the sub-array voltage transformer unit associated with the inverter unit. Further, each inverter unit may send, based on the active-power configuration value of the inverter unit and a sum of maximum power point power corresponding to the target MPPT controllers associated with all of the inverter unit, active-power configuration values to other MPPT controllers except the target MPPT controllers in the plurality of MPPT controllers coupled with the inverter unit. Herein, the target MPPT controllers coupled with each inverter unit may be MPPT controllers of a target direct-current conversion unit coupled with the inverter unit. If any inverter unit is coupled with Y direct-current conversion units, there are y target direct-current conversion units in the direct-current conversion units coupled with each inverter unit, and each direct-current conversion unit includes X MPPT controllers, active-power configuration values of the other MPPT controllers may be represented as follows: ${P}_{MPPT_o_k} = \left({P}_{inv_o_j}-{\sum }_{i = 1}^{y} {P}_{DC_i}\right) / \left(Y-y\right) ∗ X ,$ where

P_{inv_o_j} is an active-power configuration value of a j^{th} inverter unit, and P_{DC_i} is a sum of maximum active power that is enabled to be output by direct-current conversion circuits (which may be direct-current conversion circuits in direct-current conversion units where the target MPPT controllers are located) associated with target MPPT controllers in an i^{th} target direct-current conversion unit of the y target direct-current conversion units after all target MPPT controllers in the i^{th} target direct-current conversion unit perform maximum power point tracking on photovoltaic strings connected to these target MPPT controllers. Optionally, the target MPPT controllers coupled with each inverter unit may be one or more MPPT controllers in the direct-current conversion units coupled with the inverter unit. If any inverter unit is coupled with Y direct-current conversion units, there are y target direct-current conversion units in the direct-current conversion units coupled with each inverter unit, and each direct-current conversion unit includes X MPPT controllers, active-power configuration values of the other MPPT controllers may be represented as follows: ${P}_{MPPT_o_k} = \left({P}_{inv_o_j}-{\sum }_{i = 1}^{Y} {P}_{DC_i}\right) / Y ∗ \left(X-x\right) ,$ where

P_{inv_o_j} is an active-power configuration value of a j^{th} inverter unit, and P_{DC_i} is a sum of maximum active power that is enabled to be output by direct-current conversion circuits associated with target MPPT controllers in an i^{th} target direct-current conversion unit of the Y target direct-current conversion units after all target MPPT controllers in the i^{th} target direct-current conversion unit perform maximum power point tracking on photovoltaic strings connected to these target MPPT controllers. Optionally, when a direct-current conversion unit is integrated in an inverter unit (as shown in FIG. 4), the target MPPT controllers coupled with each inverter unit may be some MPPT controllers in a plurality of MPPT controllers coupled with the inverter unit. If any inverter unit is coupled with X MPPT controllers, and the MPPT controllers coupled with any inverter unit include x target MPPT controllers, active-power configuration values of the other MPPT controllers may be represented as follows: ${P}_{MPPT_o_k} = \left({P}_{inv_o_j}-{\sum }_{i = 1}^{x} {P}_{MPPT_i}\right) / \left(X-x\right) ,$ where

P_{inv_o_j} is an active-power configuration value of a j^{th} inverter unit, and P_{MPPT_i} is maximum active power that is enabled to be output by a direct-current conversion circuit associated with an i^{th} target MPPT controller in the x target MPPT controllers coupled with the j^{th} inverter unit after the i^{th} target MPPT controller performs maximum power point tracking on a photovoltaic string connected to the i^{th} target MPPT controller. It may be understood that, in the power control mode in which active power control takes precedence, when received target active power of the power station is less than the active capacity of the power station, the power-station controller assigns an active-power configuration value to each sub-array voltage transformer unit based on the active capacity of the power station, the target active power of the power station, and the active-power configuration value of each sub-array voltage transformer unit; each sub-array voltage transformer unit sends an active-power configuration value to each inverter unit based on the active capacity of the sub-array voltage transformer unit, the assigned active-power configuration value, and the active capacity of each inverter unit; and each inverter unit sends, based on the assigned active-power configuration value and a sum of maximum power point power corresponding to the target MPPT controllers associated with all of the inverter unit, active-power configuration values to other MPPT controllers except the target MPPT controllers in the plurality of MPPT controllers coupled with the inverter unit, so that a sum of active power output by direct-current conversion circuits associated with the target MPPT controllers coupled with all of the inverter units and associated with the other MPPT controllers, is equal to the target active power of the power station. In this way, the power-station controller performs power control on the MPPT controllers coupled with all of the inverter units based on the obtained active capacity of the power station and the obtained reactive capacity of the power station. Power control precision is high, and reliability is high.

S705: Update the reactive capacity of the power station.

S706: Determine whether target reactive power of the power station is greater than the updated reactive capacity of the power station; and if a judgment result is Yes, perform step S707; or if a judgment result is No, perform step S708.

S707: Adjust a value of the target reactive power of the power station to the updated reactive capacity of the power station.

S708: Control each inverter unit to perform reactive power control.

In some feasible implementations, a power control mode of the power-station controller is that active power control takes precedence; and when received target active power of the power station is not less than the active capacity of the power station, the power-station controller may perform reactive power control on each inverter unit based on the target reactive power of the power station and the reactive capacity of the power station, so that a sum of reactive power output by all of the inverter units is equal to the target reactive power of the power station or the updated reactive capacity of the power station. Specifically, the power-station controller may obtain, based on the reactive capacity of the power station, the target reactive power of the power station, and the reactive capacity of each sub-array voltage transformer unit, a reactive-power configuration value of each sub-array voltage transformer unit; and when the target reactive power of the power station is greater than the reactive capacity of the power station, adjust a value of the target reactive power of the power station to be the same as the reactive capacity of the power station. Herein, the reactive-power configuration value of each sub-array voltage transformer unit may be represented as follows: ${Q}_{arr_o_i} = \frac{{Q}_{ord}}{{Q}_{plt}} {Q}_{arr_i} ,$ where

Q_{arr_o_i} is a reactive-power configuration value of an i^{th} sub-array voltage transformer unit, Q_{ord} is the target reactive power of the power station, Qₚₗₜ is the reactive capacity of the power station, and Q_{arr_i} is a reactive capacity of the i^{th} sub-array voltage transformer unit. In other words, a ratio of the reactive-power configuration value of each sub-array voltage transformer unit to the reactive capacity of each sub-array voltage transformer unit is equal to: a ratio of the target reactive power of the power station to the reactive capacity of the power station. Further, each sub-array voltage transformer unit may send a reactive-power configuration value to each inverter unit based on the reactive capacity of the sub-array voltage transformer unit, the assigned reactive-power configuration value, and the reactive capacity of each inverter unit. Herein, the reactive-power configuration value of each inverter unit may be represented as follows: ${P}_{inv_o_j} = \frac{{P}_{arr_o}}{{P}_{arr}} {P}_{inv_j} ,$ where

P_{inv_o_j} is a reactive-power configuration value of a j^{th} inverter unit, P_{inv_j} is a reactive capacity of the j^{th} inverter unit, P_{arr_o} is a reactive-power configuration value of a sub-array voltage transformer unit associated with the j^{th} inverter unit, and Pₐᵣᵣ is a reactive capacity of the sub-array voltage transformer unit associated with the j^{th} inverter unit. In other words, a ratio of a corresponding reactive-power configuration value of any inverter unit to a reactive capacity of the inverter unit is equal to: a ratio of a corresponding reactive-power configuration value of a sub-array voltage transformer unit associated with the inverter unit to a reactive capacity of the sub-array voltage transformer unit associated with the inverter unit. It may be understood that, in the power control mode in which active power control takes precedence, when received target reactive power of the power station is less than the reactive capacity of the power station, the power-station controller assigns a reactive-power configuration value to each sub-array voltage transformer unit based on the reactive capacity of the power station, the target reactive power of the power station, and the reactive-power configuration value of each sub-array voltage transformer unit; and each sub-array voltage transformer unit sends a reactive-power configuration value to each inverter unit based on the reactive capacity of the sub-array voltage transformer unit, the assigned reactive-power configuration value, and the reactive capacity of each inverter unit, so that each inverter unit performs reactive power control based on the reactive-power configuration value assigned to the inverter unit. In this way, a sum of reactive power of all of the inverter units is equal to the target reactive power of the power station or the reactive capacity of the power station (when the target reactive power of the power station is greater than the reactive capacity of the power station), thereby making full use of power resources with high reactive power control precision.

In some feasible implementations, a power control mode of the power-station controller is that active power control takes precedence; and when received target active power of the power station is less than the active capacity of the power station, the power-station controller may update, based on the target active power of the power station and maximum apparent power of the power station, the reactive capacity of the power station; and perform reactive power control on each inverter unit based on the target reactive power of the power station and the updated reactive capacity of the power station, so that a sum of reactive power output by the inverter units is equal to the target reactive power of the power station or the updated reactive capacity of the power station. Specifically, the reactive capacity of the power station may be represented as follows: ${Q}_{plt} = \sqrt{{S}_{plt}^{2} - {P}_{plt}^{2}} ,$ where

Sₚₗₜ is the maximum apparent power of the power station, and Pₚₗₜ is the active capacity of the power station. When the target active power of the power station is less than the active capacity of the power station, the updated reactive capacity of the power station may be represented as follows: ${Q}_{plt} = \sqrt{{S}_{plt}^{2} - {P}_{ord}^{2}} ,$ where

Sₚₗₜ is the maximum apparent power of the power station, and P_{ord} is the target active power of the power station. It may be understood that, because the target active power of the power station is less than the active capacity of the power station, the reactive capacity of the power station after the update is greater than the reactive capacity of the power station before the update. In this way, the reactive capacity of the power station is adjusted when the target active power is relatively small, so as to make full use of power resources of the power-station power system. The power-station controller may obtain, based on the updated reactive capacity of the power station, the target reactive power of the power station, and the reactive capacity of each sub-array voltage transformer unit, a reactive-power configuration value of each sub-array voltage transformer unit; and when the target reactive power of the power station is greater than the updated reactive capacity of the power station, adjust a value of the target reactive power of the power station to be the same as the updated reactive capacity of the power station. Herein, the reactive-power configuration value of each sub-array voltage transformer unit may be represented as follows: ${Q}_{arr_o_i} = \frac{{Q}_{ord}}{{Q}_{plt}} {Q}_{arr_i} ,$ , where

Q_{arr_o_i} is a reactive-power configuration value of an i^{th} sub-array voltage transformer unit, Q_{ord} is the target reactive power of the power station, Qₚₗₜ is the updated reactive capacity of the power station, and Q_{arr_i} is a reactive capacity of the i^{th} sub-array voltage transformer unit. In other words, a ratio of the reactive-power configuration value of each sub-array voltage transformer unit to the reactive capacity of each sub-array voltage transformer unit is equal to: a ratio of the target reactive power of the power station to the updated reactive capacity of the power station. Further, each sub-array voltage transformer unit may send a reactive-power configuration value to each inverter unit based on the reactive capacity of the sub-array voltage transformer unit, the assigned reactive-power configuration value, and the reactive capacity of each inverter unit. Herein, the reactive-power configuration value of each inverter unit may be represented as follows: ${P}_{inv_o_j} = \frac{{P}_{arr_o}}{{P}_{arr}} {P}_{inv_j} ,$ where

P_{inv_o_j} is a reactive-power configuration value of a j^{th} inverter unit, P_{inv_j} is a reactive capacity of the j^{th} inverter unit, P_{arr_o} is a reactive-power configuration value of a sub-array voltage transformer unit associated with the j^{th} inverter unit, and Pₐᵣᵣ is a reactive capacity of the sub-array voltage transformer unit associated with the j^{th} inverter unit. In other words, a ratio of a corresponding reactive-power configuration value of any inverter unit to a reactive capacity of the inverter unit is equal to: a ratio of a corresponding reactive-power configuration value of a sub-array voltage transformer unit associated with the inverter unit to a reactive capacity of the sub-array voltage transformer unit associated with the inverter unit. It may be understood that, in the power control mode in which active power control takes precedence, when received target reactive power of the power station is less than the reactive capacity of the power station, the power-station controller assigns a reactive-power configuration value to each sub-array voltage transformer unit based on the updated reactive capacity of the power station, the target reactive power of the power station, and the reactive-power configuration value of each sub-array voltage transformer unit; and each sub-array voltage transformer unit sends a reactive-power configuration value to each inverter unit based on the reactive capacity of the sub-array voltage transformer unit, the assigned reactive-power configuration value, and the reactive capacity of each inverter unit, so that each inverter unit performs reactive power control based on the reactive-power configuration value assigned to the inverter unit. In this way, a sum of reactive power of all of the inverter units is equal to the target reactive power of the power station or the updated reactive capacity of the power station (when the target reactive power of the power station is greater than the updated reactive capacity of the power station), thereby making full use of power resources with high reactive power control precision.

S709: Control each MPPT controller coupled with each inverter unit to perform maximum power point tracking on a photovoltaic string connected to the MPPT controller.

In some feasible implementations, a power control mode of the power-station controller is that active power control takes precedence; and when received target active power of the power station is not less than the active capacity of the power station, the power-station controller may control each MPPT controller coupled with each inverter unit to perform maximum power point tracking on a photovoltaic string connected to the MPPT controller, so that direct-current conversion circuits associated with the plurality of MPPT controllers output maximum active power. It may be understood that, when the target active power of the power station is greater than or equal to the active capacity of the power station, the power-station controller controls all inverter units in the power-station power system, so that each MPPT controller coupled with each inverter unit performs maximum power point tracking on a photovoltaic string connected to the MPPT controller, that is, a direct-current conversion circuit associated with each MPPT controller outputs maximum active power, so that active power output to an alternating-current power grid can meet (or is close to) the target active power of the power station, thereby making full use of power resources with high reactive power control precision.

S710: Control each inverter unit to perform reactive power control.

In some feasible implementations, when a power control mode of the power-station controller is that reactive power control takes precedence, the power-station controller may perform reactive power control on each inverter unit based on the target reactive power of the power station and the reactive capacity of the power station, so that a sum of reactive power output by all of the inverter units is equal to the target reactive power of the power station. Specifically, the power-station controller may assign a reactive-power configuration value to each sub-array voltage transformer unit based on the reactive capacity of the power station, the target reactive power of the power station, and the reactive-power configuration value of each sub-array voltage transformer unit; and each sub-array voltage transformer unit may send a reactive-power configuration value to each inverter unit based on the reactive capacity of the sub-array voltage transformer unit, the assigned reactive-power configuration value, and the reactive capacity of each inverter unit, so as to control each inverter unit to perform, based on the reactive-power configuration value assigned to the inverter unit, reactive power control. In this way, a sum of reactive power of all of the inverter units is equal to the target reactive power of the power station, thereby making full use of power resources with high reactive power control precision. The foregoing process of assigning reactive-power configuration values to each sub-array voltage transformer unit and each inverter unit is the same as the foregoing process of assigning reactive-power configuration values when the power control mode of the power-station controller is that active power control takes precedence, and details are not described herein again.

S711: Determine whether target reactive power of the power station is greater than the reactive capacity of the power station; and if a judgment result is Yes, perform step S713; or if a judgment result is No, perform step S712.

S712: Determine whether target active power of the power station is greater than the active capacity of the power station; and if a determining result is Yes, perform step S709; or if a determining result is No, perform step S716.

S713: Update the active capacity of the power station.

S714. Determine whether target active power of the power station is greater than the updated active capacity of the power station; and if a determining result is Yes, perform step S715; or if a determining result is No, perform step S716.

S715: Adjust a value of the target active power of the power station to the updated active capacity of the power station.

S716: Control other MPPT controllers except target MPPT controllers in a plurality of MPPT controllers coupled with each inverter unit to perform active power control.

In some feasible implementations, a power control mode of the power-station controller is that reactive power control takes precedence; and when the target reactive power of the power station is less than the reactive capacity of the power station and the target active power of the power station is less than the active capacity of the power station, the power-station controller may control, based on the target active power of the power station and the active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station. Specifically, in the power control mode in which reactive power control takes precedence, when received target reactive power of the power station is less than the reactive capacity of the power station and the target active power of the power station is less than the active capacity of the power station, the power-station controller assigns an active-power configuration value to each sub-array voltage transformer unit based on the active capacity of the power station, the target active power of the power station, and the active-power configuration value of each sub-array voltage transformer unit; each sub-array voltage transformer unit sends an active-power configuration value to each inverter unit based on the active capacity of the sub-array voltage transformer unit, the assigned active-power configuration value, and the active capacity of each inverter unit; and each inverter unit sends, based on the assigned active-power configuration value and a sum of maximum power point power corresponding to the target MPPT controllers associated with all of the inverter unit, active-power configuration values to other MPPT controllers except the target MPPT controllers in the plurality of MPPT controllers coupled with the inverter unit, so that a sum of active power output by direct-current conversion circuits associated with the target MPPT controllers coupled with all of the inverter units and associated with the other MPPT controllers, is equal to the target active power of the power station. In this way, the power-station controller performs power control on the MPPT controllers coupled with all of the inverter units based on the obtained active capacity of the power station and the obtained reactive capacity of the power station. Power control precision is high, and reliability is high. The foregoing process of assigning active -power configuration values to each sub-array voltage transformer unit, each inverter unit, and each MPPT controller is the same as the foregoing process of assigning active-power configuration values when the power control mode of the power-station controller is that active power control takes precedence, and details are not described herein again.

In some feasible implementation, a power control mode of the power-station controller is that reactive power control takes precedence; and when the target reactive power of the power station is less than the reactive capacity of the power station and the target active power of the power station is not less than the active capacity of the power station, the power-station controller may control each MPPT controller coupled with each inverter unit to perform maximum power point tracking on a photovoltaic string connected to the MPPT controller, so that direct-current conversion circuits associated with the plurality of MPPT controllers output maximum active power. It may be understood that, when the target active power of the power station is greater than or equal to the active capacity of the power station, the power-station controller controls all inverter units in the power-station power system, so that each MPPT controller coupled with each inverter unit performs maximum power point tracking on a photovoltaic string connected to the MPPT controller, that is, a direct-current conversion circuit associated with each MPPT controller outputs maximum active power, so that active power output to an alternating-current power grid can meet (or is close to) the target active power of the power station, thereby making full use of power resources with high reactive power control precision.

In some feasible implementations, a power control mode of the power-station controller is that reactive power control takes precedence; and when the target reactive power of the power station is not less than the reactive capacity of the power station, the power-station controller may update, based on the target reactive power of the power station and maximum apparent power of the power station, the active capacity of the power station; and control, based on the target active power of the power station and the updated active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station or the updated active capacity of the power station. Specifically, the active capacity of the power station may be represented as follows: ${P}_{plt} = \sqrt{{S}_{plt}^{2} - {Q}_{plt}^{2}} ,$ where

Sₚₗₜ is the maximum apparent power of the power station, and Qₚₗₜ is the reactive capacity of the power station. When the target reactive power of the power station is greater than the reactive capacity of the power station, the updated active capacity of the power station may be represented as follows: ${P}_{plt} = \sqrt{{S}_{plt}^{2} - {Q}_{ord}^{2}} ,$ where

Sₚₗₜ is the maximum apparent power of the power station, and Q_{ord} is the target reactive power of the power station. It may be understood that, because the target reactive power of the power station is greater than the reactive capacity of the power station, the active capacity of the power station after the update is less than the active capacity of the power station before the update. In this way, the active capacity of the power station is adjusted when the target reactive power is relatively large, so as to make full use of power resources of the power-station power system. The power-station controller may obtain, based on the updated active capacity of the power station, the target active power of the power station, and the active capacity of each sub-array voltage transformer unit, an active-power configuration value of each sub-array voltage transformer unit; and when the target active power of the power station is greater than the updated active capacity of the power station, adjust a value of the target active power of the power station to be the same as the updated active capacity of the power station. In the power control mode in which reactive power control takes precedence, when received target reactive power is not less than the reactive capacity of the power station, the power-station controller assigns an active-power configuration value to each sub-array voltage transformer unit based on the updated active capacity of the power station, the target active power of the power station, and the active-power configuration value of each sub-array voltage transformer unit; each sub-array voltage transformer unit sends an active-power configuration value to each inverter unit based on the active capacity of the sub-array voltage transformer unit, the assigned active-power configuration value, and the active capacity of each inverter unit; and each inverter unit sends, based on the assigned active-power configuration value and a sum of maximum power point power corresponding to the target MPPT controllers associated with all of the inverter unit, active-power configuration values to other MPPT controllers except the target MPPT controllers in the plurality of MPPT controllers coupled with the inverter unit, so that a sum of active power output by direct-current conversion circuits associated with the target MPPT controllers coupled with all of the inverter units and associated with the other MPPT controllers, is equal to the target active power of the power station or the updated active capacity of the power station (when the target active power of the power station is greater than the updated active capacity of the power station), thereby making full use of power resources with high power control precision and high reliability.

## Claims

1. A power-station power system, wherein the power-station power system comprises a power-station controller, a power-station voltage transformer unit, a plurality of direct-current conversion units, and a plurality of inverter units; alternating-current ends of the plurality of inverter units are coupled with and connected in parallel to the power-station voltage transformer unit; and a direct-current end of any inverter unit is coupled with maximum power point tracking MPPT controllers of the plurality of direct-current conversion units;
**characterized in that** the power-station controller is configured to: obtain (S701), based on an active capacity of each inverter unit and a reactive capacity of each inverter unit that are obtained by target MPPT controllers coupled with an inverter unit, an active capacity of a power station and a reactive capacity of the power station, wherein the target MPPT controllers coupled with the inverter unit are a part of all the MPPT controllers coupled with the inverter unit; and
the power-station controller is further configured to: perform (S704), based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with the inverter unit.

2. The power-station power system according to claim 1, wherein the power-station controller is further configured to: control the target MPPT controllers coupled with each inverter unit to perform maximum power point tracking on photovoltaic strings connected to the target MPPT controllers, to obtain the active capacity of each inverter unit and the reactive capacity of each inverter unit; and
the target MPPT controllers coupled with each inverter unit are MPPT controllers of a target direct-current conversion unit coupled with the inverter unit, and the target direct-current conversion units coupled with each inverter unit are a part of all the direct-current conversion units coupled with the inverter unit; or
the target MPPT controllers coupled with each inverter unit are one or more MPPT controllers of each direct-current conversion unit.

3. The power-station power system according to claim 2, wherein a power control mode of the power-station controller is that active power control takes precedence; and
the power-station controller is further configured to: when the target active power of the power station is less than the active capacity of the power station, control, based on the active capacity of the power station and the target active power of the power station, the other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station.

4. The power-station power system according to claim 3, wherein the power-station controller is further configured to: when the target active power of the power station is less than the active capacity of the power station, update, based on the target active power of the power station and maximum apparent power of the power station, the reactive capacity of the power station; and perform reactive power control on each inverter unit based on the target reactive power of the power station and an updated reactive capacity of the power station, so that a sum of reactive power output by the inverter units is equal to the target reactive power of the power station or the updated reactive 30 October2025 capacity of the power station.

5. The power-station power system according to claim 2, wherein a control mode of the power-station voltage transformer unit is that active power control takes precedence; and
the power-station controller is further configured to: when the target active power of the power station is not less than the active capacity of the power station, control each MPPT controller coupled with each inverter unit to perform maximum power point tracking on a photovoltaic string connected to the MPPT controller, so that direct-current conversion circuits associated with the plurality of MPPT controllers output maximum active power.

6. The power-station power system according to claim 5, wherein the power-station controller is further configured to: when the target active power of the power station is not less than the active capacity of the power station, perform reactive power control on each inverter unit based on the target reactive power of the power station and the reactive capacity of the power station, so that a sum of reactive power output by all of the inverter units is equal to the target reactive power of the power station or an updated reactive capacity of the power station.

7. The power-station power system according to claim 2, wherein a control mode of the power-station voltage transformer unit is that reactive power control takes precedence; and
the power-station controller is further configured to: perform reactive power control on each inverter unit based on the target reactive power of the power station and the reactive capacity of the power station, so that a sum of reactive power output by the inverter units is equal to the target reactive power of the power station.

8. The power-station power system according to claim 7, wherein the power-station controller is further configured to: when the target reactive power of the power station is less than the reactive capacity of the power station and the target active power of the power station is less than the active capacity of the power station, control, based on the target active power of the power station and the active capacity of the power station, the other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station.

9. The power-station power system according to claim 7, wherein the power-station controller is further configured to: when the target reactive power of the power station is less than the reactive capacity of the power station and the target active power of the power station is not less than the active capacity of the power station, control each MPPT controller coupled with each inverter unit to perform maximum power point tracking on a photovoltaic string connected to the MPPT controller, so that direct-current conversion circuits associated with the plurality of MPPT controllers output maximum active power.

10. The power-station power system according to claim 7, wherein the power-station controller is further configured to: when the target reactive power of the power station is not less than the reactive capacity of the power station, update, based on the target reactive power of the power station and maximum apparent power of the power station, the active capacity of the power station; and control, based on the target active power of the power station and the updated active capacity of the power station, the other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station or the updated active capacity of the power station.

11. The power-station power system according to any one of claims 3 to 10, wherein one or more inverter units in the plurality of inverter units form one sub-array voltage transformer unit, and a plurality of sub-array voltage transformer units are coupled with and connected in parallel to the power-station voltage transformer unit; and the power-station controller is further configured to: obtain an active-power configuration value or a reactive-power configuration value of each sub-array voltage transformer unit; and control each sub-array voltage transformer unit to control, based on the active-power configuration value of the sub-array voltage transformer unit, other MPPT controllers except the target MPPT controllers in the plurality of MPPT controllers coupled with each inverter unit to perform active power control; or perform reactive power control on each inverter unit based on the reactive-power configuration value of each sub-array voltage transformer unit.

12. A method for controlling power of a power-station power system, wherein the power-station power system comprises a power-station controller, a power-station voltage transformer unit, a plurality of direct-current conversion units, and a plurality of inverter units; alternating-current ends of the plurality of inverter units are coupled with and connected in parallel to the power-station voltage transformer unit; and a direct-current end of any inverter unit is coupled with maximum power point tracking MPPT controllers of a plurality of direct-current conversion units; and the method is **characterized by**:
obtaining, by using the inverter units, an active capacity of each inverter unit and a reactive capacity of each inverter unit based on target MPPT controllers coupled with an inverter unit, wherein the target MPPT controllers coupled with the inverter unit are a part of all MPPT controllers coupled with the inverter unit;
obtaining, by using the power-station controller, based on the active capacity of each inverter unit and the reactive capacity of each inverter unit, an active capacity of a power station and a reactive capacity of the power station; and
performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with the inverter unit.

13. The method according to claim 12, wherein a power control mode of the power-station controller is that active power control takes precedence; and the performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit comprises:
when the target active power of the power station is less than the active capacity of the power station, controlling, by using the power-station controller, based on the active capacity of the power station and the target active power of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station; and
when the target active power of the power station is less than the active capacity of the power station, updating, by using the power-station controller, based on the target active power of the power station and maximum apparent power of the power station, the reactive capacity of the power station; and performing, by using the power-station controller, reactive power control on each inverter unit based on the target reactive power of the power station and the updated reactive capacity of the power station, so that a sum of reactive power output by all of the inverter units is equal to the target reactive power of the power station or the updated reactive capacity of the power station.

14. The method according to claim 12, wherein a power control mode of the power-station controller is that active power control takes precedence; and the performing, by using the power-station controller, based on the active capacity of the power station, target active power of the power station, the reactive capacity of the power station, 30 October2025 and/or target reactive power of the power station, reactive power control on each inverter unit and active power control on other MPPT controllers except the target MPPT controllers in the plurality of MPPT controllers coupled with each inverter unit comprises:
when the target active power of the power station is not less than the active capacity of the power station, controlling, by using the power-station controller, each MPPT controller coupled with each inverter unit to perform maximum power point tracking on a photovoltaic string connected to the MPPT controller, so that direct-current conversion circuits associated with the plurality of MPPT controllers output maximum active power; and
when the target active power of the power station is not less than the active capacity of the power station, performing, by using the power-station controller, reactive power control on each inverter unit based on the target reactive power of the power station and the reactive capacity of the power station, so that a sum of reactive power output by all of the inverter units is equal to the target reactive power of the power station or the updated reactive capacity of the power station.

15. The method according to claim 12, wherein a power control mode of the power-station controller is that reactive power control takes precedence; and the performing, by using the power-station controller, based on the active capacity of the power station, target active power of the power station, the reactive capacity of the power station, and/or target reactive power of the power station, reactive power control on each inverter unit and active power control on other MPPT controllers except the target MPPT controllers in the plurality of MPPT controllers coupled with each inverter unit comprises:
performing, by using the power-station controller, reactive power control on each inverter unit based on the target reactive power of the power station and the reactive capacity of the power station, so that a sum of reactive power output by all of the inverter units is equal to the target reactive power of the power station;
when the target reactive power of the power station is less than the reactive capacity of the power station and the target active power of the power station is less than the active capacity of the power station, controlling, by using the power-station controller, based on the target active power of the power station and the active capacity of the power station, other MPPT controllers except the target MPPT controllers in the plurality of MPPT controllers coupled with each inverter unit to perform active power control, so that a sum of active power output by direct-current conversion circuits coupled with all of the inverter units is equal to the target active power of the power station; and
when the target reactive power of the power station is less than the reactive capacity of the power station and the target active power of the power station is not less than the active capacity of the power station, controlling, by using the power-station controller, each MPPT controller coupled with each inverter unit to perform maximum power point tracking on a photovoltaic string connected to the MPPT controller, so that direct-current conversion circuits associated with the plurality of MPPT controllers output maximum active power.

## Patentansprüche

1. Kraftwerk-Energiesystem, wobei das Kraftwerk-Energiesystem eine Kraftwerkssteuereinheit, eine Kraftwerk-Spannungstransformatoreinheit, eine Vielzahl von Gleichstromwandlereinheiten und eine Vielzahl von Wechselrichtereinheiten umfasst; wobei die Wechselstromseiten der Vielzahl von Wechselrichtereinheiten mit der Kraftwerk-Spannungstransformatoreinheit gekoppelt und mit dieser parallel geschaltet sind; und wobei eine Gleichstromseite einer beliebigen Wechselrichtereinheit mit Steuereinheiten zur Nachführung des maximalen Leistungspunkts, MPPT-Steuereinheiten, der Vielzahl von Gleichstromwandlereinheiten gekoppelt ist;
**dadurch gekennzeichnet, dass** die Kraftwerkssteuereinheit konfiguriert ist zum: Erhalten (S701), basierend auf einer Wirkleistungskapazität von jeder Wechselrichtereinheit und einer Blindleistungskapazität von jeder Wechselrichtereinheit, die durch Ziel-MPPT-Steuereinheiten erhalten werden, die mit einer Wechselrichtereinheit gekoppelt sind, einer Wirkleistungskapazität eines Kraftwerks und einer Blindleistungskapazität des Kraftwerks, wobei die Ziel-MPPT-Steuereinheiten, die mit der Wechselrichtereinheit gekoppelt sind, ein Teil aller MPPT-Steuereinheiten sind, die mit der Wechselrichtereinheit gekoppelt sind; und
wobei die Kraftwerkssteuereinheit ferner konfiguriert ist zum: Durchführen (S704), basierend auf der Wirkleistungskapazität des Kraftwerks, der Zielwirkleistung des Kraftwerks, der Blindleistungskapazität des Kraftwerks und/oder der Zielblindleistung des Kraftwerks, einer Blindleistungssteuerung in jeder Wechselrichtereinheit und einer Wirkleistungssteuerung in anderen MPPT-Steuereinheiten mit Ausnahme der Ziel-MPPT-Steuereinheiten in der Vielzahl von MPPT-Steuereinheiten, die mit der Wechselrichtereinheit gekoppelt sind.

2. Kraftwerk-Energiesystem nach Anspruch 1, wobei die Kraftwerkssteuereinheit ferner konfiguriert ist zum: Steuern der Ziel-MPPT-Steuereinheiten, die mit jeder Wechselrichtereinheit gekoppelt sind, um eine Nachführung des maximalen Leistungspunkts in Photovoltaikketten durchzuführen, die mit den Ziel-MPPT-Steuereinheiten verbunden sind, um die Wirkleistungskapazität von jeder Wechselrichtereinheit und die Blindleistungskapazität von jeder Wechselrichtereinheit zu erhalten; und
wobei die Ziel-MPPT-Steuereinheiten, die mit jeder Wechselrichtereinheit gekoppelt sind, MPPT-Steuereinheiten einer Zielgleichstromwandlereinheit sind, die mit der Wechselrichtereinheit gekoppelt sind, und wobei die Zielgleichstromwandlereinheiten, die mit jeder Wechselrichtereinheit gekoppelt sind, ein Teil aller Gleichstromwandlereinheiten sind, die mit der Wechselrichtereinheit gekoppelt sind; oder
wobei die Ziel-MPPT-Steuereinheiten, die mit jeder Wechselrichtereinheit gekoppelt sind, eine oder mehrere MPPT-Steuereinheiten von jeder Gleichstromwandlereinheit sind.

3. Kraftwerk-Energiesystem nach Anspruch 2, wobei ein Leistungsregelungsmodus der Kraftwerkssteuereinheit ist, dass eine Wirkleistungssteuerung einen Vorrang hat; und
wobei die Kraftwerkssteuereinheit ferner konfiguriert ist zum: wenn die Zielwirkleistung des Kraftwerks geringer als die Wirkleistungskapazität des Kraftwerks ist, Steuern, basierend auf der Wirkleistungskapazität des Kraftwerks und der Zielwirkleistung des Kraftwerks, der anderen MPPT-Steuereinheiten mit Ausnahme der Ziel-MPPT-Steuereinheiten in der Vielzahl von MPPT-Steuereinheiten, die mit jeder Wechselrichtereinheit gekoppelt sind, um eine Wirkleistungssteuerung durchzuführen, sodass eine Summe der Wirkleistungsausgabe von den Gleichstromwandlerschaltungen, die mit allen Wechselrichtereinheiten gekoppelt sind, gleich der Zielwirkleistung des Kraftwerks ist.

4. Kraftwerk-Energiesystem nach Anspruch 3, wobei die Kraftwerkssteuereinheit ferner konfiguriert ist zum: wenn die Zielwirkleistung des Kraftwerks geringer als die Wirkleistungskapazität des Kraftwerks ist, Aktualisieren, basierend auf der Zielwirkleistung des Kraftwerks und der maximalen Scheinleistung des Kraftwerks, der Blindleistungskapazität des Kraftwerks; und Durchführen einer Blindleistungssteuerung in jeder Wechselrichtereinheit basierend auf der Zielblindleistung des Kraftwerks und einer aktualisierten Blindleistungskapazität des Kraftwerks, sodass eine Summe der Blindleistungsausgabe von den Wechselrichtereinheiten gleich der Zielblindleistung des Kraftwerks oder der aktualisierten Blindleistungskapazität des Kraftwerks ist.

5. Kraftwerk-Energiesystem nach Anspruch 2, wobei ein Steuermodus der Kraftwerk-Spannungstransformatoreinheit ist, dass eine Wirkleistungssteuerung Vorrang hat; und
wobei die Kraftwerkssteuereinheit ferner konfiguriert ist zum: wenn die Zielwirkleistung des Kraftwerks nicht geringer als die Wirkleistungskapazität des Kraftwerks ist, Steuern von jeder MPPT-Steuereinheit, die mit jeder Wechselrichtereinheit gekoppelt ist, um eine Nachführung des maximalen Leistungspunkts in einer Photovoltaikkette durchzuführen, die mit der MPPT-Steuereinheit verbunden ist, sodass Gleichstromwandlerschaltungen, die mit der Vielzahl von MPPT-Steuereinheiten assoziiert sind, eine maximale Wirkleistung ausgeben.

6. Kraftwerk-Energiesystem nach Anspruch 5, wobei die Kraftwerkssteuereinheit ferner konfiguriert ist zum: wenn die Zielwirkleistung des Kraftwerks nicht geringer als die Wirkleistungskapazität des Kraftwerks ist, Durchführen einer Blindleistungssteuerung in jeder Wechselrichtereinheit basierend auf der Zielblindleistung des Kraftwerks und der Blindleistungskapazität des Kraftwerks, sodass eine Summe der Blindleistungsausgabe von allen Wechselrichtereinheiten gleich der Zielblindleistung des Kraftwerks oder einer aktualisierten Blindleistungskapazität des Kraftwerks ist.

7. Kraftwerk-Energiesystem nach Anspruch 2, wobei ein Steuermodus der Kraftwerk-Spannungstransformatoreinheit ist, dass eine Blindleistungssteuerung Vorrang hat; und
wobei die Kraftwerkssteuereinheit ferner konfiguriert ist zum: Durchführen einer Blindleistungssteuerung in jeder Wechselrichtereinheit basierend auf der Zielblindleistung des Kraftwerks und der Blindleistungskapazität des Kraftwerks, sodass eine Summe der Blindleistungsausgabe von den Wechselrichtereinheiten gleich der Zielblindleistung des Kraftwerks ist.

8. Kraftwerk-Energiesystem nach Anspruch 7, wobei die Kraftwerkssteuereinheit ferner konfiguriert ist zum: wenn die Zielblindleistung des Kraftwerks geringer als die Blindleistungskapazität des Kraftwerks ist und die Zielwirkleistung des Kraftwerks geringer als die Wirkleistungskapazität des Kraftwerks ist, Steuern, basierend auf der Zielwirkleistung des Kraftwerks und der Wirkleistungskapazität des Kraftwerks, der anderen MPPT-Steuereinheiten mit Ausnahme der Ziel-MPPT-Steuereinheiten in der Vielzahl von MPPT-Steuereinheiten, die mit jeder Wechselrichtereinheit gekoppelt sind, um eine Wirkleistungssteuerung durchzuführen, sodass eine Summe der Wirkleistungsausgabe von den Gleichstromwandlerschaltungen, die mit allen Wechselrichtereinheiten gekoppelt sind, gleich der Zielwirkleistung des Kraftwerks ist.

9. Kraftwerk-Energiesystem nach Anspruch 7, wobei die Kraftwerkssteuereinheit ferner konfiguriert ist zum: wenn die Zielblindleistung des Kraftwerks geringer als die Blindleistungskapazität des Kraftwerks ist und die Zielwirkleistung des Kraftwerks nicht geringer als die Wirkleistungskapazität des Kraftwerks ist, Steuern von jeder MPPT-Steuereinheit, die mit jeder Wechselrichtereinheit gekoppelt ist, um eine Nachführung des maximalen Leistungspunkts in einer Photovoltaikkette durchzuführen, die mit der MPPT-Steuereinheit verbunden ist, sodass Gleichstromwandlerschaltungen, die mit der Vielzahl von MPPT-Steuereinheiten assoziiert sind, eine maximale Wirkleistung ausgeben.

10. Kraftwerk-Energiesystem nach Anspruch 7, wobei die Kraftwerkssteuereinheit ferner konfiguriert ist zum: wenn die Zielblindleistung des Kraftwerks nicht geringer als die Blindleistungskapazität des Kraftwerks ist, Aktualisieren, basierend auf der Zielblindleistung des Kraftwerks und der maximalen Scheinleistung des Kraftwerks, der Wirkleistungskapazität des Kraftwerks; und Steuern, basierend auf der Zielwirkleistung des Kraftwerks und der aktualisierten Wirkleistungskapazität des Kraftwerks, der anderen MPPT-Steuereinheiten mit Ausnahme der Ziel-MPPT-Steuereinheiten in der Vielzahl von MPPT-Steuereinheiten, die mit jeder Wechselrichtereinheit gekoppelt sind, um eine Wirkleistungssteuerung durchzuführen, sodass eine Summe der Wirkleistungsausgabe von den Gleichstromwandlerschaltungen, die mit allen Wechselrichtereinheiten gekoppelt sind, gleich der Zielwirkleistung des Kraftwerks oder der aktualisierten Wirkleistungskapazität des Kraftwerks ist.

11. Kraftwerk-Energiesystem nach einem der Ansprüche 3 bis 10, wobei eine oder mehrere Wechselrichtereinheiten in der Vielzahl von Wechselrichtereinheiten eine Teilarray-Spannungstransformatoreinheit bilden und wobei eine Vielzahl von Teilarray-Spannungstransformatoreinheiten mit der Kraftwerk-Spannungstransformatoreinheit gekoppelt und zu dieser parallel geschaltet sind; und
wobei die Kraftwerkssteuereinheit ferner konfiguriert ist zum: Erhalten eines Wirkleistungskonfigurationswerts oder eines Blindleistungskonfigurationswerts von jeder Teilarray-Spannungstransformatoreinheit; und Steuern von jeder Teilarray-Spannungstransformatoreinheit, um, basierend auf dem Wirkleistungskonfigurationswert der Teilarray-Spannungstransformatoreinheit, andere MPPT-Steuereinheiten mit Ausnahme der Ziel-MPPT-Steuereinheiten in der Vielzahl von MPPT-Steuereinheiten zu steuern, die mit jeder Wechselrichtereinheit gekoppelt sind, um eine Wirkleistungssteuerung durchzuführen; oder Durchführen einer Blindleistungssteuerung in jeder Wechselrichtereinheit basierend auf dem Blindleistungskonfigurationswert von jeder Teilarray-Spannungstransformatoreinheit.

12. Verfahren zum Steuern einer Leistung eines Kraftwerk-Energiesystems, wobei das Kraftwerk-Energiesystem eine Kraftwerkssteuereinheit, eine Kraftwerk-Spannungstransformatoreinheit, eine Vielzahl von Gleichstromwandlereinheiten und eine Vielzahl von Wechselrichtereinheiten umfasst; wobei Wechselstromseiten der Vielzahl von Wechselrichtereinheiten mit der Kraftwerk-Spannungstransformatoreinheit gekoppelt und zu dieser parallel geschaltet sind; und wobei eine Gleichstromseite einer beliebigen Wechselrichtereinheit mit Steuereinheiten zur Nachführung des maximalen Leistungspunkts, MPPT-Steuereinheiten, der Vielzahl von Gleichstromwandlereinheiten gekoppelt ist; und wobei das Verfahren **gekennzeichnet ist durch**:
Erhalten, indem die Wechselrichtereinheiten verwendet werden, einer Wirkleistungskapazität von jeder Wechselrichtereinheit und einer Blindleistungskapazität von jeder Wechselrichtereinheit basierend auf Ziel-MPPT-Steuereinheiten, die mit einer Wechselrichtereinheit gekoppelt sind, wobei die Ziel-MPPT-Steuereinheiten, die mit der Wechselrichtereinheit gekoppelt sind, ein Teil aller MPPT-Steuereinheiten sind, die mit der Wechselrichtereinheit gekoppelt sind;
Erhalten, indem die Kraftwerkssteuereinheit verwendet wird, basierend auf der Wirkleistungskapazität von jeder Wechselrichtereinheit und der Blindleistungskapazität von jeder Wechselrichtereinheit, einer Wirkleistungskapazität eines Kraftwerks und einer Blindleistungskapazität des Kraftwerks; und
Durchführen, indem die Kraftwerkssteuereinheit verwendet wird, basierend auf der Wirkleistungskapazität des Kraftwerks, der Zielwirkleistung des Kraftwerks, der Blindleistungskapazität des Kraftwerks und/oder der Zielblindleistung des Kraftwerks, einer Blindleistungssteuerung in jeder Wechselrichtereinheit und einer Wirkleistungssteuerung in anderen MPPT-Steuereinheiten mit Ausnahme der Ziel-MPPT-Steuereinheiten in der Vielzahl von MPPT-Steuereinheiten, die mit der Wechselrichtereinheit gekoppelt sind.

13. Verfahren nach Anspruch 12, wobei ein Leistungsregelungsmodus der Kraftwerkssteuereinheit ist, dass die Wirkleistungssteuerung Vorrang hat, und wobei das Durchführen, indem die Kraftwerkssteuereinheit verwendet wird, basierend auf der Wirkleistungskapazität des Kraftwerks, der Zielwirkleistung des Kraftwerks, der Blindleistungskapazität des Kraftwerks und/oder der Zielblindleistung des Kraftwerks, einer Blindleistungssteuerung in jeder Wechselrichtereinheit und einer Wirkleistungssteuerung in anderen MPPT-Steuereinheiten mit Ausnahme der Ziel-MPPT-Steuereinheiten in der Vielzahl von MPPT-Steuereinheiten, die mit jeder Wechselrichtereinheit gekoppelt sind, umfasst:
wenn die Zielwirkleistung des Kraftwerks geringer als die Wirkleistungskapazität des Kraftwerks ist, Steuern, indem die Kraftwerkssteuereinheit verwendet wird, basierend auf der Wirkleistungskapazität des Kraftwerks und der Zielwirkleistung des Kraftwerks, von anderen MPPT-Steuereinheiten mit Ausnahme der Ziel-MPPT-Steuereinheiten in der Vielzahl von MPPT-Steuereinheiten, die mit jeder Wechselrichtereinheit gekoppelt sind, um eine Wirkleistungssteuerung durchzuführen, sodass eine Summe der Wirkleistungsausgabe von den Gleichstromwandlerschaltungen, die mit allen Wechselrichtereinheiten gekoppelt sind, gleich der Zielwirkleistung des Kraftwerks ist; und
wenn die Zielwirkleistung des Kraftwerks geringer als die Wirkleistungskapazität des Kraftwerks ist, Aktualisieren, indem die Kraftwerkssteuereinheit verwendet wird, basierend auf der Zielwirkleistung des Kraftwerks und der maximalen Scheinleistung des Kraftwerks, der Blindleistungskapazität des Kraftwerks; und Durchführen, indem die Kraftwerkssteuereinheit verwendet wird, einer Blindleistungssteuerung in jeder Wechselrichtereinheit basierend auf der Zielblindleistung des Kraftwerks und der aktualisierten Blindleistungskapazität des Kraftwerks, sodass eine Summe der Blindleistungsausgabe von allen Wechselrichtereinheiten gleich der Zielblindleistung des Kraftwerks oder der aktualisierten Blindleistungskapazität des Kraftwerks ist.

14. Verfahren nach Anspruch 12, wobei ein Leistungsregelungsmodus der Kraftwerkssteuereinheit ist, dass die Wirkleistungssteuerung Vorrang hat, und wobei das Durchführen, indem die Kraftwerkssteuereinheit verwendet wird, basierend auf der Wirkleistungskapazität des Kraftwerks, der Zielwirkleistung des Kraftwerks, der Blindleistungskapazität des Kraftwerks und/oder der Zielblindleistung des Kraftwerks, einer Blindleistungssteuerung in jeder Wechselrichtereinheit und einer Wirkleistungssteuerung in anderen MPPT-Steuereinheiten mit Ausnahme der Ziel-MPPT-Steuereinheiten in der Vielzahl von MPPT-Steuereinheiten, die mit jeder Wechselrichtereinheit gekoppelt sind, umfasst:
wenn die Zielwirkleistung des Kraftwerks nicht geringer als die Wirkleistungskapazität des Kraftwerks ist, Steuern, indem die Kraftwerkssteuereinheit verwendet wird, von jeder MPPT-Steuereinheit, die mit jeder Wechselrichtereinheit gekoppelt ist, um eine Nachführung des maximalen Leistungspunkts in einer Photovoltaikkette durchzuführen, die mit der MPPT-Steuereinheit verbunden ist, sodass Gleichstromwandlerschaltungen, die mit der Vielzahl von MPPT-Steuereinheiten assoziiert sind, eine maximale Wirkleistung ausgeben; und
wenn die Zielwirkleistung des Kraftwerks nicht geringer als die Wirkleistungskapazität des Kraftwerks ist, Durchführen, indem die Kraftwerkssteuereinheit verwendet wird, einer Blindleistungssteuerung in jeder Wechselrichtereinheit basierend auf der Zielblindleistung des Kraftwerks und der Blindleistungskapazität des Kraftwerks, sodass eine Summe der Blindleistungsausgabe von allen Wechselrichtereinheiten gleich der Zielblindleistung des Kraftwerks oder der aktualisierten Blindleistungskapazität des Kraftwerks ist.

15. Verfahren nach Anspruch 12, wobei ein Leistungsregelungsmodus der Kraftwerkssteuereinheit ist, dass die Blindleistungssteuerung Vorrang hat, und wobei das Durchführen, indem die Kraftwerkssteuereinheit verwendet wird, basierend auf der Wirkleistungskapazität des Kraftwerks, der Zielwirkleistung des Kraftwerks, der Blindleistungskapazität des Kraftwerks und/oder der Zielblindleistung des Kraftwerks, einer Blindleistungssteuerung in jeder Wechselrichtereinheit und einer Wirkleistungssteuerung in anderen MPPT-Steuereinheiten mit Ausnahme der Ziel-MPPT-Steuereinheiten in der Vielzahl von MPPT-Steuereinheiten, die mit jeder Wechselrichtereinheit gekoppelt sind, umfasst:
Durchführen, indem die Kraftwerkssteuereinheit verwendet wird, einer Blindleistungssteuerung in jeder Wechselrichtereinheit, basierend auf der Zielblindleistung des Kraftwerks und der Blindleistungskapazität des Kraftwerks, sodass eine Summe der Blindleistungsausgabe von allen Wechselrichtereinheiten gleich der Zielblindleistung des Kraftwerks ist;
wenn die Zielblindleistung des Kraftwerks geringer als die Blindleistungskapazität des Kraftwerks ist und die Zielwirkleistung des Kraftwerks geringer als die Wirkleistungskapazität des Kraftwerks ist, Steuern, indem die Kraftwerkssteuereinheit verwendet wird, basierend auf der Zielwirkleistung des Kraftwerks und der Wirkleistungskapazität des Kraftwerks, von anderen MPPT-Steuereinheiten mit Ausnahme der Ziel-MPPT-Steuereinheiten in der Vielzahl von MPPT-Steuereinheiten, die mit jeder Wechselrichtereinheit gekoppelt sind, um eine Wirkleistungssteuerung durchzuführen, sodass eine Summe der Wirkleistungsausgabe von den Gleichstromwandlerschaltungen, die mit allen Wechselrichtereinheiten gekoppelt sind, gleich der Zielwirkleistung des Kraftwerks ist; und
wenn die Zielblindleistung des Kraftwerks geringer als die Blindleistungskapazität des Kraftwerks ist und die Zielwirkleistung des Kraftwerks nicht geringer als die Wirkleistungskapazität des Kraftwerks ist, Steuern, indem die Kraftwerkssteuereinheit verwendet wird, von jeder MPPT-Steuereinheit, die mit jeder Wechselrichtereinheit gekoppelt ist, um eine Nachführung des maximalen Leistungspunkts in einer Photovoltaikkette durchzuführen, die mit der MPPT-Steuereinheit verbunden ist, sodass Gleichstromwandlerschaltungen, die mit der Vielzahl von MPPT-Steuereinheiten assoziiert sind, eine maximale Wirkleistung ausgeben.

## Revendications

1. Système d'alimentation de centrale électrique, dans lequel le système d'alimentation de centrale électrique comprend un contrôleur de centrale électrique, une unité de transformation de tension de centrale électrique, une pluralité d'unités de conversion de courant continu et une pluralité d'unités onduleurs ; des extrémités de courant alternatif de la pluralité d'unités onduleurs sont couplées et connectées en parallèle à l'unité de transformation de tension de centrale électrique ; et une extrémité de courant continu de n'importe quelle unité onduleur est couplée à des contrôleurs de suivi de point de puissance maximale MPPT de la pluralité d'unités de conversion de courant continu ;
**caractérisé en ce que** le contrôleur de centrale électrique est configuré pour : obtenir (S701), sur la base d'une capacité active de chaque unité onduleur et d'une capacité réactive de chaque unité onduleur obtenues par des contrôleurs MPPT cibles couplés à une unité onduleur, une capacité active d'une centrale électrique et une capacité réactive de la centrale électrique, les contrôleurs MPPT cibles couplés à l'unité onduleur faisant partie de tous les contrôleurs MPPT couplés à l'unité onduleur ; et
le contrôleur de centrale électrique est en outre configuré pour : réaliser (S704), sur la base de la capacité active de la centrale électrique, une puissance active cible de la centrale électrique, la capacité réactive de la centrale électrique et/ou une puissance réactive cible de la centrale électrique, une commande de puissance réactive sur chaque unité onduleur et une commande de puissance active sur d'autres contrôleurs MPPT à l'exception des contrôleurs MPPT cibles dans la pluralité de contrôleurs MPPT couplés à l'unité onduleur.

2. Système d'alimentation de centrale électrique selon la revendication 1, dans lequel le contrôleur de centrale électrique est en outre configuré pour : commander les contrôleurs MPPT cibles couplés à chaque unité onduleur pour réaliser un suivi de point de puissance maximale sur des chaînes photovoltaïques connectées aux contrôleurs MPPT cibles, pour obtenir la capacité active de chaque unité onduleur et la capacité réactive de chaque unité onduleur ; et
les contrôleurs MPPT cibles couplés à chaque unité onduleur sont des contrôleurs MPPT d'une unité de conversion de courant continu cible couplée à l'unité onduleur, et les unités de conversion de courant continu cible couplées à chaque unité onduleur font partie de toutes les unités de conversion de courant continu couplées à l'unité onduleur ; ou
les contrôleurs MPPT cibles couplés à chaque unité onduleur sont un ou plusieurs contrôleurs MPPT de chaque unité de conversion de courant continu.

3. Système d'alimentation de centrale électrique selon la revendication 2, dans lequel un mode de commande de puissance du contrôleur de centrale électrique est que la commande de puissance active est prioritaire ; et
le contrôleur de centrale électrique est en outre configuré pour : lorsque la puissance active cible de la centrale électrique est inférieure à la capacité active de la centrale électrique, commander, sur la base de la capacité active de la centrale électrique et de la puissance active cible de la centrale électrique, les autres contrôleurs MPPT à l'exception des contrôleurs MPPT cibles de la pluralité de contrôleurs MPPT couplés à chaque unité onduleur pour réaliser une commande de puissance active, de sorte qu'une somme de puissance active délivrée par des circuits de conversion de courant continu couplés à toutes les unités onduleurs est égale à la puissance active cible de la centrale électrique.

4. Système d'alimentation de centrale électrique selon la revendication 3, dans lequel le contrôleur de centrale électrique est en outre configuré pour : lorsque la puissance active cible de la centrale électrique est inférieure à la capacité active de la centrale électrique, mettre à jour, sur la base de la puissance active cible de la centrale électrique et d'une puissance apparente maximale de la centrale électrique, la capacité réactive de la centrale électrique ; et réaliser une commande de puissance réactive sur chaque unité onduleur sur la base de la puissance réactive cible de la centrale électrique et d'une capacité réactive mise à jour de la centrale électrique, de sorte qu'une somme de puissance réactive délivrée par les unités onduleurs est égale à la puissance réactive cible de la centrale électrique ou à la capacité réactive mise à jour de la centrale électrique.

5. Système d'alimentation de centrale électrique selon la revendication 2, dans lequel un mode de commande de l'unité de transformation de tension de centrale électrique est que la commande de puissance active est prioritaire ; et
le contrôleur de centrale électrique est en outre configuré pour : lorsque la puissance active cible de la centrale électrique n'est pas inférieure à la capacité active de la centrale électrique, commander chaque contrôleur MPPT couplé à chaque unité onduleur pour réaliser un suivi de point de puissance maximale sur une chaîne photovoltaïque connectée au contrôleur MPPT, de sorte que des circuits de conversion de courant continu associés à la pluralité de contrôleurs MPPT produisent une puissance active maximale.

6. Système d'alimentation de centrale électrique selon la revendication 5, dans lequel le contrôleur de centrale électrique est en outre configuré pour : lorsque la puissance active cible de la centrale n'est pas inférieure à la capacité active de la centrale électrique, réaliser une commande de puissance réactive sur chaque unité onduleur sur la base de la puissance réactive cible de la centrale électrique et de la capacité réactive de la centrale électrique, de sorte qu'une somme de puissance réactive délivrée par toutes les unités onduleurs est égale à la puissance réactive cible de la centrale électrique ou à une capacité réactive mise à jour de la centrale électrique.

7. Système d'alimentation de centrale électrique selon la revendication 2, dans lequel un mode de commande de l'unité de transformation de tension de centrale électrique est que la commande de puissance réactive est prioritaire ; et
le contrôleur de centrale électrique est en outre configuré pour : réaliser une commande de puissance réactive sur chaque unité onduleur sur la base de la puissance réactive cible de la centrale électrique et de la capacité réactive de la centrale électrique, de sorte qu'une somme de puissance réactive délivrée par les unités onduleurs est égale à la puissance réactive cible de la centrale électrique.

8. Système d'alimentation de centrale électrique selon la revendication 7, dans lequel le contrôleur de centrale électrique est en outre configuré pour : lorsque la puissance réactive cible de la centrale électrique est inférieure à la capacité réactive de la centrale électrique et que la puissance active cible de la centrale électrique est inférieure à la capacité active de la centrale électrique, commander, sur la base de la puissance active cible de la centrale électrique et de la capacité active de la centrale électrique, les autres contrôleurs MPPT à l'exception des contrôleurs MPPT cibles de la pluralité de contrôleurs MPPT couplés à chaque unité onduleur pour réaliser une commande de puissance active, de sorte qu'une somme de puissance active délivrée par des circuits de conversion de courant continu couplés à toutes les unités onduleurs est égale à la puissance active cible de la centrale électrique.

9. Système d'alimentation de centrale électrique selon la revendication 7, dans lequel le contrôleur de centrale électrique est en outre configuré pour : lorsque la puissance réactive cible de la centrale électrique est inférieure à la capacité réactive de la centrale électrique et que la puissance active cible de la centrale électrique n'est pas inférieure à la capacité active de la centrale électrique, commander chaque contrôleur MPPT couplé à chaque unité onduleur pour réaliser un suivi de point de puissance maximale sur une chaîne photovoltaïque connectée au contrôleur MPPT, de sorte que des circuits de conversion de courant continu associés à la pluralité de contrôleurs MPPT produisent une puissance active maximale.

10. Système d'alimentation de centrale électrique selon la revendication 7, dans lequel le contrôleur de centrale électrique est en outre configuré pour : lorsque la puissance réactive cible de la centrale électrique n'est pas inférieure à la capacité réactive de la centrale électrique, mettre à jour, sur la base de la puissance réactive cible de la centrale électrique et de la puissance apparente maximale de la centrale électrique, la capacité active de la centrale électrique ; et commander, sur la base de la puissance active cible de la centrale électrique et de la capacité active mise à jour de la centrale électrique, les autres contrôleurs MPPT à l'exception des contrôleurs MPPT cibles de la pluralité de contrôleurs MPPT couplés à chaque unité onduleur pour réaliser une commande de puissance active, de sorte qu'une somme de puissance active délivrée par des circuits de conversion de courant continu couplés à toutes les unités onduleurs est égale à la puissance active cible de la centrale électrique ou à la capacité active mise à jour de la centrale électrique.

11. Système d'alimentation de centrale électrique selon l'une quelconque des revendications 3 à 10, dans lequel une ou plusieurs unités onduleurs dans la pluralité d'unités onduleurs forment une unité de transformation de tension de sous-réseau, et une pluralité d'unités de transformation de tension de sous-réseau sont couplées avec et connectées en parallèle à l'unité de transformation de tension de centrale électrique ; et
le contrôleur de centrale électrique est en outre configuré pour : obtenir une valeur de configuration de puissance active ou une valeur de configuration de puissance réactive de chaque unité de transformation de tension de sous-réseau ; et commander chaque unité de transformation de tension de sous-réseau pour commander, sur la base de la valeur de configuration de puissance active de l'unité de transformation de tension de sous-réseau, d'autres contrôleurs MPPT à l'exception des contrôleurs MPPT cibles dans la pluralité de contrôleurs MPPT couplés à chaque unité onduleur pour réaliser une commande de puissance active ; ou réaliser une commande de puissance réactive sur chaque unité onduleur sur la base de la valeur de configuration de puissance réactive de chaque unité de transformation de tension de sous-réseau.

12. Procédé de commande de puissance de système d'alimentation de centrale électrique, dans lequel le système d'alimentation de centrale électrique comprend un contrôleur de centrale électrique, une unité de transformation de tension de centrale électrique, une pluralité d'unités de conversion de courant continu et une pluralité d'unités onduleurs ; des extrémités de courant alternatif de la pluralité d'unités onduleurs sont couplées et connectées en parallèle à l'unité de transformation de tension de centrale électrique ; et une extrémité de courant continu de n'importe quelle unité onduleur est couplée à des contrôleurs de suivi de point de puissance maximale MPPT d'une pluralité d'unités de conversion de courant continu ; et le procédé est **caractérisé par** :
l'obtention, en utilisant les unités onduleurs, d'une capacité active de chaque unité onduleur et d'une capacité réactive de chaque unité onduleur sur la base de contrôleurs MPPT cibles couplés à une unité onduleur, les contrôleurs MPPT cibles couplés à l'unité onduleur faisant partie de tous les contrôleurs MPPT couplés à l'unité onduleur ;
l'obtention, en utilisant le contrôleur de centrale électrique, sur la base de la capacité active de chaque unité onduleur et de la capacité réactive de chaque unité onduleur, d'une capacité active d'une centrale électrique et d'une capacité réactive de la centrale électrique ; et
la réalisation, en utilisant le contrôleur de centrale électrique, sur la base de la capacité active de la centrale électrique, une puissance active cible de la centrale électrique, la capacité réactive de la centrale électrique et/ou une puissance réactive cible de la centrale électrique, une commande de puissance réactive sur chaque unité onduleur et une commande de puissance active sur d'autres contrôleurs MPPT à l'exception des contrôleurs MPPT cibles dans la pluralité de contrôleurs MPPT couplés à l'unité onduleur.

13. Procédé selon la revendication 12, dans lequel un mode de commande de puissance du contrôleur de centrale électrique est qu'une commande de puissance active est prioritaire ; et la réalisation, en utilisant le contrôleur de centrale électrique, sur la base de la capacité active de la centrale électrique, de la puissance active cible de la centrale électrique, de la capacité réactive de la centrale électrique, et/ou de la puissance réactive cible de la centrale électrique, d'une commande de puissance réactive sur chaque unité onduleur et d'une commande de puissance active sur d'autres contrôleurs MPPT à l'exception des contrôleurs MPPT cibles de la pluralité de contrôleurs MPPT couplés à chaque unité onduleur comprend :
lorsque la puissance active cible de la centrale électrique est inférieure à la capacité active de la centrale électrique, la commande, en utilisant le contrôleur de centrale électrique, sur la base de la capacité active de la centrale électrique et de la puissance active cible de la centrale électrique, d'autres contrôleurs MPPT à l'exception des contrôleurs MPPT cibles de la pluralité de contrôleurs MPPT couplés à chaque unité onduleur pour réaliser une commande de puissance active, de sorte qu'une somme de puissance active délivrée par des circuits de conversion de courant continu couplés à toutes les unités onduleurs est égale à la puissance active cible de la centrale électrique ; et
lorsque la puissance active cible de la centrale électrique est inférieure à la capacité active de la centrale électrique, la mise à jour, en utilisant le contrôleur de la centrale électrique, sur la base de la puissance active cible de la centrale électrique et d'une puissance apparente maximale de la centrale électrique, de la capacité réactive de la centrale électrique ; et la réalisation, en utilisant le contrôleur de centrale électrique, d'une commande de puissance réactive sur chaque unité onduleur sur la base de la puissance réactive cible de la centrale électrique et de la capacité réactive mise à jour de la centrale électrique, de sorte qu'une somme de puissance réactive délivrée par toutes les unités onduleurs est égale à la puissance réactive cible de la centrale électrique ou à la capacité réactive mise à jour de la centrale électrique.

14. Procédé selon la revendication 12, dans lequel un mode de commande de puissance du contrôleur de centrale électrique est qu'une commande de puissance active est prioritaire ; et la réalisation, en utilisant le contrôleur de centrale électrique, sur la base de la capacité active de la centrale électrique, de la puissance active cible de la centrale électrique, de la capacité réactive de la centrale électrique, et/ou de la puissance réactive cible de la centrale électrique, d'une commande de puissance réactive sur chaque unité onduleur et d'une commande de puissance active sur d'autres contrôleurs MPPT à l'exception des contrôleurs MPPT cibles de la pluralité de contrôleurs MPPT couplés à chaque unité onduleur comprend :
lorsque la puissance active cible de la centrale électrique n'est pas inférieure à la capacité active de la centrale électrique, la commande, en utilisant le contrôleur de centrale électrique, de chaque contrôleur MPPT couplé à chaque unité onduleur pour réaliser un suivi de point de puissance maximale sur une chaîne photovoltaïque connectée au contrôleur MPPT, de sorte que des circuits de conversion de courant continu associés à la pluralité de contrôleurs MPPT produisent une puissance active maximale ; et
lorsque la puissance active cible de la centrale électrique n'est pas inférieure à la capacité active de la centrale électrique, la réalisation, en utilisant le contrôleur de centrale électrique, d'une commande de puissance réactive sur chaque unité onduleur sur la base de la puissance réactive cible de la centrale électrique et de la capacité réactive de la centrale électrique, de sorte qu'une somme de puissance réactive délivrée par toutes les unités onduleurs est égale à la puissance réactive cible de la centrale électrique ou à la capacité réactive mise à jour de la centrale électrique.

15. Procédé selon la revendication 12, dans lequel un mode de commande de puissance du contrôleur de centrale électrique est qu'une commande de puissance réactive est prioritaire ; et la réalisation, en utilisant le contrôleur de centrale électrique, sur la base de la capacité active de la centrale électrique, de la puissance active cible de la centrale électrique, de la capacité réactive de la centrale électrique, et/ou de la puissance réactive cible de la centrale électrique, d'une commande de puissance réactive sur chaque unité onduleur et d'une commande de puissance active sur d'autres contrôleurs MPPT à l'exception des contrôleurs MPPT cibles de la pluralité de contrôleurs MPPT couplés à chaque unité onduleur comprend :
la réalisation, en utilisant le contrôleur de centrale électrique, d'une commande de puissance réactive sur chaque unité onduleur sur la base de la puissance réactive cible de la centrale électrique et de la capacité réactive de la centrale électrique de sorte qu'une somme de la puissance réactive délivrée par toutes les unités onduleurs est égale à la puissance réactive cible de la centrale électrique ;
lorsque la puissance réactive cible de la centrale électrique est inférieure à la capacité réactive de la centrale électrique et que la puissance active cible de la centrale électrique est inférieure à la capacité active de la centrale électrique, la commande, en utilisant le contrôleur de centrale électrique, sur la base de la puissance active cible de la centrale électrique et de la capacité active de la centrale électrique, d'autres contrôleurs MPPT à l'exception des contrôleurs MPPT cibles de la pluralité de contrôleurs MPPT couplés à chaque unité onduleur pour réaliser une commande de puissance active, de sorte qu'une somme de puissance active délivrée par des circuits de conversion de courant continu couplés à toutes les unités onduleurs est égale à la puissance active cible de la centrale électrique ; et
lorsque la puissance réactive cible de la centrale électrique est inférieure à la capacité réactive de la centrale électrique et que la puissance active cible de la centrale électrique n'est pas inférieure à la capacité active de la centrale électrique, la commande, en utilisant le contrôleur de centrale électrique, de chaque contrôleur MPPT couplé à chaque unité onduleur pour réaliser un suivi de point de puissance maximale sur une chaîne photovoltaïque connectée au contrôleur MPPT, de sorte que des circuits de conversion de courant continu associés à la pluralité de contrôleurs MPPT produisent une puissance active maximale.
